# EUROPEAN PATENT APPLICATION

(11) **EP 1 743 928 A1**
(43) Date of publication of application: **17.01.2007**
(21) Application number: 05721095.7
(22) Date of filing: 18.03.2005
(51) Int. Cl.: C09K 3/10, C08G 81/02

(54) **SEALING MATERIAL COMPOSITION**

(30) Priority: 26.03.2004 JP 2004090783; 01.11.2004 JP 2004318438; 24.01.2005 JP 2005016172
(71) Applicant: KANEKA CORPORATION, Osaka-shi, Osaka 530-8288 (JP)
(72) Inventor: NAKASHIMA, Tohru, Settsu-shi, Osaka 5660072 (JP); AOYAMA, Taizo, Hyogo 6760025 (JP)
(74) Representative: Vossius & Partner
(86) International application number: PCT/JP2005/004908
(87) International publication number: WO 2005/093005

(57) **Abstract**

The present invention relates to a sealing material composition comprising a novel resin composition and excellent not only in gas barrier properties but also in hot melt adhesive properties, in particular. It also relates to a sealing material made by using the above-mentioned composition, in particular a sealing material for double glazing. The present invention can be accomplished by using a sealing material composition which comprises an alkenyl group-terminated isobutylene-based polymer (A), a thermoplastic resin (B) and a compound (C) containing at least two hydrosilyl groups within the molecule thereof.

## Description

### TECHNICAL FIELD

The present invention relates to a sealing material composition comprising a novel resin composition and excellent not only in gas barrier properties but also in hot melt adhesive properties, in particular. It also relates to a sealing material made by using the above-mentioned composition, in particular a sealing material for double glazing.

### BACKGROUND ART

A sealing material is a material showing high gas barrier performance and is used in various fields of application, for example as or in a glass sealing material, gaskets, caps for medical use, food packaging, interior and exterior decoration of cars, civil engineering and waterproof sheets. Among these, sealing materials (sealants) for double glazing have been the targets of enthusiastic development in recent years.

Double glazing is a highly heat-insulating kind of glass and recent years has attracted attention from the energy saving viewpoint. Current double glazing species are mostly constructed by opposing at least two panes of glass to each other with metal spacers sandwiched therebetween to form a gap or hollow space. And, a primary sealing material is caused to occur between each pane and each aluminum spacer to isolate the hollow space from the open air, and the gap (depression) formed by the periphery inside of each pane of glass and the outer circumferential surfaces of the spacers is sealed with a cold curing secondary sealing material, typically of the polysulfide or silicone type.

So far, investigations and proposals have been made in the double glazing production processes for productivity improvement, hence cost reduction, among others, by various means of simplification or automation. For example, a method has been proposed which uses spacers made of a resin composition containing a desiccant kneaded thereinto in lieu of aluminum spacers.

However, in the case of double glazing in which such a cold curing sealing material is used, a long period of time is required for curing of the sealing material after double glazing manufacture, irrespective of the type of spacer species used. Therefore, it is a problem that the product cannot be shipped until completion of curing.

From the double glazing cost reduction viewpoint, a method has been proposed which comprises using moldings of a resin with a desiccant kneaded thereinto as spacers and at the same time as sealing materials to produce double glazing without using any cold curing secondary sealing material (Japanese Kokoku Publication Sho61-20501). However, the spacer resin described in Japanese Kokoku Publication Sho61-20501 is insufficient in hardness and, with spacers made of such a resin alone, the shape of double glazing can hardly be maintained.

Another kind of double glazing that is known uses sealing material spacers made of a material having a JIS A hardness of 95 and comprising an extrudable rigid resin, for example a vinyl chloride resin, a hot-melt butyl or a like thermoplastic resin, with a desiccant kneaded thereinto (Japanese Kokai Publication Hei07-17748). When this material is used as spacers or sealing materials for double glazing, however, the sealing portions and panes of double glazing are subjected to high stresses, so that the seal portion may be peeled off or at least one of the very double glazed panes may possibly be broken, for instance; this is a drawback.

As a method of preventing double glazing from breaking, the method of producing double glazing using sealing material spacers made of a resin comprising a crystalline polyolefin and a butyl rubber, without using any cold curing secondary sealing material has been proposed (Japanese Kokai Publication Hei10-114552). However, this composition, in which a butyl rubber having cold flow characteristics is used as the main component, has a problem from the long-term durability viewpoint in certain fields of use. Namely, a prolonged period of use tends to result in peeling or deformation of the sealing portions.

On the other hand, a method which comprises using a triblock copolymer composed of a block(s) consisting of isobutylene units and a block(s) consisting of aromatic vinyl compound units as an elastic sealing material for double glazing (International Publication WO 01/010969) and a sealing material for double glazing based on a thermoplastic elastomer composition comprising a dynamically crosslinked rubber phase dispersed in a continuous thermoplastic resin phase (Japanese Kokai Publication 2000-119537) have respectively been proposed. These compositions have high gas barrier properties and have no cold flow characteristics, so that such sealing material deformations as encountered with the composition in which a butyl rubber is used as the main component, which is described in Japanese Kokai Publication Hei10-114552, can be prevented. However, they are high in melt viscosity in the temperature range for hot melt adhesion thereof to glass panes, so that sufficient levels of bond strength can hardly be obtained and thus a problem arises from the long-term durability viewpoint. Another drawback is that the sealing portions are subject to peeling.

### SUMMARY OF THE INVENTION

In the state of the art, that sort of double glazing in which any secondary sealing material is not used but a single material is used as sealing material spacers and which satisfies all the requirements concerning such characteristics as life, retention of shape and moldability is not known. It is an object of the present invention to solve the problem of long period requirement for curing after manufacture and provide a sealing material for double glazing capable of retaining their bonding strength and shape and showing high-level gas barrier properties for a long period of time.

The present inventors made intensive investigations and, as a result, have completed to the present invention.

Thus, the present invention relates to
a sealing material composition
which comprises an alkenyl group-terminated isobutylene-based polymer (A), a thermoplastic resin (B) and a compound (C) containing at least two hydrosilyl groups within the molecule thereof.

In a preferred embodiment thereof, the invention relates to
the sealing material composition as mentioned above
which further comprises a carbon-carbon unsaturated bond-containing functional group-containing compound (D), which is different from the component (A).

In a preferred embodiment thereof, the invention relates to the sealing material composition as mentioned above
which further comprises at least one nitrogen atom-containing compound (E) selected from among amines, amides and carboxylic acid hydrazides.

In a preferred embodiment thereof, the invention relates to the sealing material composition as mentioned above
wherein the alkenyl group-terminated isobutylene-based polymer (A) is crosslinked by the compound (C) containing at least two hydrosilyl groups within the molecule thereof.

In a preferred embodiment thereof, the invention relates to the sealing material composition as mentioned above
wherein the alkenyl group-terminated isobutylene-based polymer (A) is dynamically crosslinked by the compound (C) containing at least two hydrosilyl groups within the molecule thereof in the step of melt kneading with the thermoplastic resin (B).

In a preferred embodiment thereof, the invention relates to
the sealing material composition as mentioned above
which further comprises a tackifier resin (F).

In a preferred embodiment thereof, the invention relates to
the sealing material composition as mentioned above
which further comprises an inorganic filler (G).

In a preferred embodiment thereof, the invention relates to
the sealing material composition as mentioned above
which further comprises a plasticizer (H).

In a preferred embodiment thereof, the invention relates to
the sealing material composition as mentioned above
which further comprises an alkoxysilane compound (I).

In a preferred embodiment thereof, the invention relates to
the sealing material composition as mentioned above
which is at least one species selected from the group consisting of thermoplastic elastomers, polyethylene, polypropylene, ethylene-α-olefin copolymers, polyisobutylene, isobutylene-isoprene copolymers (butyl rubbers), chlorinated butyl, brominated butyl, isobutylene-(p-methylstyrene) copolymers, and brominated isobutylene-(p-methylstyrene) copolymers.

In a preferred embodiment thereof, the invention relates to
the sealing material composition as mentioned above
wherein the thermoplastic elastomers are styrenic thermoplastic elastomers and/or thermoplastic polyurethane elastomers.

In a preferred embodiment thereof, the invention relates to
the sealing material composition as mentioned above
wherein the styrenic thermoplastic elastomer is an isobutylene-based block copolymer (B1) composed of a polymer block (a) derived from an aromatic vinyl compound as the constituent monomer and a polymer block (b) derived from isobutylene as the constituent monomer.

In a preferred embodiment thereof, the invention relates to
the sealing material composition as mentioned above
wherein the isobutylene-based block copolymer (B1) is a triblock copolymer composed of a polymer block (a) derived from an aromatic vinyl compound as the constituent monomer/a polymer block (b) derived from isobutylene as the constituent monomer/a polymer block (a) derived from an aromatic vinyl compound as the constituent monomer.

In a preferred embodiment thereof, the invention relates to
the sealing material composition as mentioned above
wherein the isobutylene-based block copolymer (B1) is a diblock copolymer composed of a polymer block (a) derived from an aromatic vinyl compound as the constituent monomer and a polymer block (b) derived from isobutylene as the constituent monomer.

In a preferred embodiment thereof, the invention relates to
the sealing material composition as mentioned above
wherein the compound (C) is a polyorganohydrogensiloxane (C1) containing two hydrosilyl groups, on average, per molecule of the molecule thereof.

In a preferred embodiment thereof, the invention relates to
the sealing material composition as mentioned above
wherein the polyorganohydrogensiloxane (C1) is a polyorganohydrogensiloxane comprising 2 to 200 siloxane units.

In a preferred embodiment thereof, the invention relates to
the sealing material composition as mentioned above
wherein the carbon-carbon unsaturated bond-containing functional group-containing compound (D) further has at least one functional group selected from the group consisting of an epoxy group, alkoxy groups, radical polymerizable unsaturated groups, a carboxyl group, a carboxylic acid anhydride group, halogen atoms and alkoxysilyl groups.

In a preferred embodiment thereof, the invention relates to
the sealing material composition as mentioned above
wherein the carbon-carbon unsaturated bond-containing functional group-containing compound (D) is allyl glycidyl ether and/or monoallyl diglycidyl isocyanurate.

In a preferred embodiment thereof, the invention relates to
the sealing material composition as mentioned above
wherein the nitrogen atom-containing compound (E) is at least one species selected from among dicarboxylic acid hydrazides.

Further, the invention relates to
a sealing material
which comprises the sealing material composition mentioned above. Further, the invention relates to
a sealing material for double glazing
which comprises the sealing composition mentioned above.

Further, the invention relates to
a spacer for double glazing
which comprises the sealing material composition mentioned above.

### Effects of the invention

The sealing material composition of the invention has good gas barrier properties and hot melt tackiness or adhesiveness and is a material excellent in durability and can be suitably used as a sealing material for double glazing, in particular. Further, the sealing material composition of the invention has an appropriate level of hardness, so that it can suitably be used as spacers for double glazing provided with a sealing material function.

### DETAILED DESCRIPTION OF THE INVENTION

The sealing material composition of the invention relates to a sealing material composition which comprises an alkenyl group-terminated isobutylene-based polymer (A), a thermoplastic resin (B) and a compound (C) containing at least two hydrosilyl groups within the molecule thereof. As a result of employment of such composition, the sealing material composition of the invention has hot melt tackiness or adhesiveness and long-term adhesion retention characteristics. Therefore, it is suited for use as or in various sealing materials and further is excellent in gas barrier properties and has an appropriate level of hardness, so that it can be said to be a resin composition suited for use as a sealing material for double glazing, in particular.

The term "alkenyl group-terminated isobutylene-based polymer (A)" as used herein means a polymer whose isobutylene content is not lower than 50% by weight relative to the whole amount of the isobutylene-based polymer (A). The isobutylene content is preferably not lower than 70% by weight, more preferably not lower than 90% by weight.

The monomer or monomers other than isobutylene in the isobutylene-based polymer (A) are not particularly restricted provided that they are cationically polymerizable monomer components, and such monomers as aromatic vinyl compounds, aliphatic olefins, dienes, vinyl ethers, and β-pinene, among others, can be mentioned. These may be used each independently or in a combination of two or more species.

As said aromatic vinyl compounds, there may be mentioned, among others, styrene, o-, m- or p-methylstyrene, α-methylstyrene, β-methylstyrene, 2,6-dimethylstyrene, 2,4-dimethylstyrene, α-methyl-o-methylstyrene, α-methyl-m-methylstyrene, α-methyl-p-methylstyrene, β-methyl-o-methylstyrene, β-methyl-m-methylstyrene, β-methyl-p-methylstyrene, 2,4,6-trimethylstyrene, α-methyl-2,6-dimethylstyrene, α-methyl-2,4-dimethylstyrene, β-methyl-2,6-dimethylstyrene, β-methyl-2,4-dimethylstyrene, o-, m-, or p-chlorostyrene, 2,6-dichlorostyrene, 2,4-dichlorostyrene, α-chloro-o-chlorostyrene, α-chloro-m-chlorostyrene, α-chloro-p-chlorostyrene, β-chloro-o-chlorostyrene, β-chloro-m-chlorostyrene, β-chloro-p-chlorostyrene, 2,4,6-trichlorostyrene, α-chloro-2,6-dichlorostyrene, α-chloro-2,4-dichlorostyrene, β-chloro-2,6-dichlorostyrene, β-chloro-2,4-dichlorostyrene, o-, m-, or p-t-butylstyrene, o-, m-, or p-methoxystyrene, o-, m-, or p-chloromethylstyrene, o-, m-, or p-bromomethylstyrene, silyl-substituted styrene derivatives, indene, vinyl naphthalene and the like. These may be used each independently or in combination two or more species.

As said aliphatic olefins, there may be mentioned, among others, ethylene, propylene, 1-butene, 2-methyl-1-butene, 3-methyl-1-butene, pentene, hexene, cyclohexene, 4-methyl-1-pentene, vinylcyclohexane, octane, norbornene and the like. These may be used each independently or in a combination of two or more species.

As said dienes, there may be mentioned, among others, butadiene, isoprene, hexadiene, cyclopentadiene, cyclohexadiene, dicyclopentadiene, divinylbenzene, ethylidenenorbornene and the like. These may be used each independently or in a combination of two or more species.

As said vinyl ethers, there may be mentioned, among others, methylvinylether, ethylvinylether, (n- or iso)propylvinylether, (n-, sec-, tert-, or iso)butylvinylether, methylpropenylether, ethylpropenylether and the like. These may be used each independently or in a combination of two or more species.

The molecular weight of the isobutylene-based polymer (A) is not particularly restricted but, when expressed in terms of number average molecular weight, it is preferably 1,000 to 500,000, particularly preferably 5,000 to 200,000. When the number average molecular weight is lower than 1,000, there is a tendency for the tackiness or adhesiveness to be hardly displayed on the occasion of hot melt adhesion. When it exceeds 500,000, the flow tends to decrease in the step of hot melt adhesion. The term "number average molecular weight" as used herein refers to the value expressed on the polystyrene equivalent basis as determined by gel permeation chromatography.

The isobutylene-based polymer (A) can be produced by cationic polymerization of isobutylene alone or of isobutylene and another monomer.

The alkenyl group, so referred to herein, is not particularly restricted but may be any alkenyl group containing a carbon-carbon double bond active in the hydrosilylation reaction, which is to be described later herein, of the component (A) for accomplishing the object of the invention. As typical examples, there may be mentioned aliphatic unsaturated hydrocarbon groups such as vinyl, allyl, methylvinyl, propenyl, butenyl, pentenyl and hexenyl, and cyclic unsaturated hydrocarbon groups such as cyclopropenyl, cyclobutenyl, cyclopentenyl and cyclohexenyl.

As the method of terminal alkenyl group introduction to give the isobutylene-based polymer (A), there may be mentioned the method of introducing an unsaturated group into polymers which comprises reacting a polymer containing a functional group(s) such as a hydroxyl group(s) with an unsaturated group-containing compound, as disclosed in Japanese Kokai Publication Hei03-152164 or Japanese Kokai Publication Hei07-304909. Further, for unsaturated group introduction into halogen atom-containing polymers, there may be mentioned, for example, the method based on the Friedel-Crafts reaction with an alkenyl phenyl ether, the method based on a substitution reaction with allyltrimethylsilane or the like in the presence of a Lewis acid, and the method comprising hydroxyl group introduction by the Friedel-Crafts reaction with a phenol, further followed by the above-mentioned alkenyl group introduction reaction. Further, as disclosed in U.S. Patent No. 4,316,973, Japanese Kokai Publication Sho63-105005 and Japanese Kokai Publication Hei04-288309, it is also possible to effect unsaturated group introduction on the occasion of polymerization of the monomer or monomers. Among them, the method of terminal allyl group introduction by the substitution reaction of allyltrimethylsilane with a terminal chlorine atom of an isobutylene-based polymer is preferred from the viewpoint of reliability of introduction.

The terminal alkenyl group content of the isobutylene-based polymer (A) is preferably at least 0.2 per molecule, more preferably at least 1 per molecule. When such content is lower than 0.2, the reaction with the compound (C), which is to be described later herein, will proceed only to an insufficient extent, so that the melt viscosity at elevated temperatures will lower, with the result that the shape of the composition cannot be retained in some instances on the occasion of hot melt adhesion to substrates such as glass panes.

The content of the isobutylene-based polymer (A) may vary depending on the other components used in combination, hence cannot be generally specified. Preferably, however, that content is not lower than 10% by weight, more preferably not lower than 20% by weight, on the sealing material composition. At levels lower than that value, the tackiness or adhesiveness will be low and, further, the gas barrier properties tend to deteriorate.

The thermoplastic resin (B) is not particularly restricted but may comprise at least one species selected from the group consisting of plastics, rubbers and thermoplastic elastomers.

As the plastics, there may be mentioned, for example, polyolefins such as polypropylene and polyethylene, polystyrene, acrylonitrile-butadiene-styrene (ABS) copolymers, methyl methacrylate-butadiene-styrene (MBS) copolymers, acrylics, polyurethanes, polyvinyl chloride, polyesters and polyamides. Among these, polyethylene, polypropylene and polyethylene-α-olefin copolymers, which can flow at lower temperatures and show high gas barrier properties, are preferred. As examples of the polyethylene-α-olefin copolymers, there may be mentioned ethylene-propylene copolymers, ethylene-butene copolymers, ethylene-hexene copolymers, ethylene-octene copolymers, ethylene-vinyl acetate copolymers, ethylene-ethyl acrylate copolymers and ethylene-vinyl alcohol copolymers, among others.

As the rubbers, there may be mentioned, for example, polyethers, polybutadiene, natural rubber species, polyisobutylene, isobutylene-isoprene copolymers (butyl rubbers), chlorinated butyl, brominated butyl, isobutylene-(p-methylstyrene) copolymers, brominated isobutylene-(p-methylstyrene) copolymers, chloroprene rubbers and ethylene-propylene rubbers, among others. Preferred among these from the gas barrier property viewpoint are polyisobutylene, isobutylene-isoprene copolymers (butyl rubbers), chlorinated butyl, brominated butyl, isobutylene-(p-methylstyrene) copolymers and brominated isobutylene-(p-methylstyrene) copolymers.

As the thermoplastic elastomers, there may be mentioned, for example, styrenic thermoplastic elastomers which are block copolymers composed of a polystyrene block(s) and a polybutadiene and/or polyisoprene block(s), olefinic thermoplastic elastomers consisting of a polyolefin component such as polypropylene and a rubber component such as an ethylene-propylene rubber, vinyl chloride-based thermoplastic elastomers comprising crystalline or noncrystalline polyvinyl chloride, thermoplastic polyurethane elastomers which are block copolymers composed of a polyurethane block(s) and a polyether block(s) or the like, thermoplastic polyester elastomers which are block copolymers composed of a polyester block (s) and a polyether block (s) or the like, and thermoplastic polyamide elastomers which are block copolymers composed of a polyamide block (s) and a polyether block (s) or the like. Among these thermoplastic elastomers, styrenic thermoplastic elastomers and thermoplastic polyurethane elastomers are particularly preferred in view of their softening point and hot melt tackiness or adhesiveness to the glass surface. These may be used singly or two or more of them may be used in combination.

The styrenic thermoplastic elastomers are not particularly restricted but include, among others, conjugated diene-based block copolymers composed of a polymer block(s) derived from an aromatic vinyl compound as the constituent and a polymer block(s) derived from a conjugated diene as the constituent, hydrogenated conjugated diene-based block copolymers composed of a polymer block(s) derived from an aromatic vinyl compound as the constituent and a polymer block derived from a hydrogenated conjugated diene as the constituent, and isobutylene-based block copolymers (hereinafter referred to as "isobutylene-based block copolymers (B1)") composed of a polymer block (s) (a) derived from an aromatic vinyl compound as the constituent and a polymer block(s) (b) derived from isobutylene as the constituent. Most preferred among them are isobutylene-based block copolymers (B1) from the gas barrier property viewpoint, in particular.

As the polymer block derived from a conjugated diene as the constituent, there may be mentioned, for example, polybutadiene blocks, polyisoprene blocks, and blocks derived from a combination of butadiene and isoprene, among others. As the polymer block derived from a hydrogenated conjugated diene as the constituent, there may be mentioned partially hydrogenated conjugated diene polymer blocks and totally hydrogenated conjugated diene polymer blocks (e.g. ethylene-butylene copolymer blocks, ethylene-propylene copolymer blocks), among others. As the aromatic vinyl compound, there may be mentioned ones comprising at least one monomer selected from the group consisting of styrene, α-methylstyrene, p-methylstyrene and indene. From the cost viewpoint, styrene, α-methylstyrene or a mixture of these is preferred.

Among the styrenic thermoplastic elastomers, isobutylene-based block copolymers (B1) are preferred from the hot melt workability, high temperature shape retention and molecular weight controllability viewpoint. The structure thereof is not particularly restricted but, for example, block copolymers, diblock copolymers, triblock copolymers, multiblock copolymers and the like having a straight chain, branched chain, star-shaped or other structure can all be selected. As block copolymers preferred from the balanced physical property viewpoint, there may be mentioned, among others, triblock copolymers composed of a polymer block (b) derived from an aromatic vinyl compound as the constituent, a polymer block (b) derived from isobutylene as the constituent and a polymer block (a) derived from an aromatic vinyl compound as the constituent, in that order, diblock copolymer composed of a polymer block (a) derived from an aromatic vinyl compound as the constituent and a polymer block (b) derived from isobutylene as the constituent, and star-shaped block copolymers having at least three arms each composed of a polymer block (a) derived from an aromatic vinyl compound as the constituent and a polymer block (b) derived from isobutylene as the constituent, and triblock copolymers and diblock copolymers are particularly preferred. It is possible to use these either singly or in combination of two or more species so that the desired physical properties and hot melt workability may be obtained.

The aromatic vinyl compound constituting the polymer block (a) is not particularly restricted but a compound containing an aromatic ring and a cation polymerizable carbon-carbon double bond is preferred for the production of copolymers with a polymer block (b). As such compound, there may be mentioned, for example, styrene, p-methylstyrene, α-methylstyrene, p-chlorostyrene, p-tert-butylstyrene, p-methoxystyrene, p-chloromethylstyrene, p-bromomethylstyrene, silyl group-substituted styrene species and indene, among others. These may be used singly or two or more of them may be used in combination. Preferred among them is at least one species selected from the group consisting of styrene, α-methylstyrene, p-methylstyrene and indene. From the cost viewpoint, the use of styrene, α-methylstyrene, or a mixture of these is particularly preferred.

The polymer block (a) may contain a monomer other than the aromatic vinyl compound or may not contain any such monomer. In cases where the polymer block (a) contains a monomer other than the aromatic vinyl monomer, the content of the aromatic vinyl compound in the whole polymer block (a) is preferably not lower than 60% by weight, more preferably not lower than 80% by weight. When the aromatic vinyl compound content in the whole polymer block (a) is not higher than 60% by weight, the cohesive force of the polymer block (a) unfavorably decreases. The monomer other than the aromatic vinyl compound in the polymer block (a) is not particularly restricted but may be any of those monomers which can be cationically polymerizable with the aromatic vinyl compound, including, for example, isobutylene, aliphatic olefins, dienes, vinyl ethers and β-pinene, among others. These may be used singly or two or more of them may be used in combination.

The molecular weight of the polymer block (a) derived from an aromatic vinyl compound as the constituent is not particularly restricted but is preferably not higher than 30, 000 as expressed in terms of number average molecular weight. When such number average molecular weight requirement is satisfied, materials which are hot melt workable (namely low in melt viscosity upon heating to elevated temperatures) can be obtained. When the number average molecular weight is not lower than 30, 000, the corresponding block copolymer is hardly melted even at elevated temperatures, hence hot melt working thereof is difficult.

The number average molecular weight of the polymer block (a) is further preferably not lower than 1, 000 but not higher than 20,000. When the number average molecular weight of the polymer block (a) is excessively low, the fluidity at around room temperature rises and the cold flow properties appear, tending to produce a problem from the shape retention viewpoint. The polymer block (b) constituting the isobutylene-based block copolymer (B1) to be used according to the invention is a polymer block derived from isobutylene as the constituent.

The molecular weight of the polymer block (b) is not particularly restricted but is preferably adjusted so that the isobutylene-based block copolymer (B1) as a whole may acquire such a preferred number average molecular weight value as described later herein.

The polymer block (b) may contain a monomer other than isobutylene or may not contain isobutylene. In cases where it contains a monomer other than isobutylene, the content of isobutylene in the whole polymer block (b) is preferably not lower than 60% by weight, more preferably not lower than 80% by weight. The monomer other than isobutylene in the polymer block (b) is not particularly restricted but may be any of those monomers cationically polymerizable with isobutylene, including, for example, such monomers as the above-mentioned aromatic vinyl compounds, aliphatic olefins, dienes, vinyl ethers and β-pinene. These may be used singly or two or more of them may be used in combination.

The proportion between the polymer block (a) derived from an aromatic vinyl compound as the constituent and the polymer block (b) derived from isobutylene as the constituent in the isobutylene-based block copolymer (B1) is not particularly restricted but, from the viewpoint of a balance between the gas barrier properties and hot melt properties, the weight ratio polymer block (a) :polymer block (b) is preferably 5: 95 to 40: 60, more preferably 10:90 to 40:60.

The molecular weight of the isobutylene-based block copolymer (B1) is not particularly restricted, either. From the hot melt adhesion and workability viewpoint, however, it is preferably 3, 000 to 500, 000, more preferably 5, 0.00 to 300, 000, as expressed in terms of number average molecular weight. When the number average molecular weight of the isobutylene-based block copolymer (B1) is lower than the above range, the flowability at around room temperature will become high and, accordingly, deformation will readily occur. When, on the other hand, it is higher than the above range, the flowability at elevated temperatures will become insufficient and the hot melt workability tends to become inferior.

The method of producing the isobutylene-based block copolymer (B1) is not particularly restricted but any of the polymerization methods known in the art can be used. For obtaining a structurally controlled block copolymer, however, it is preferable to polymerize a monomer component derived from isobutylene as the constituent and a monomer component derived from an aromatic vinyl compound as the constituent in the presence of a compound represented by the general formula (1) :

(CR¹R²X)nR³ (1)

[wherein X represents a substituent selected from the group consisting of halogen atoms, alkoxyl groups containing 1 to 6 carbon atoms and acyloxy groups containing 1 to 6 carbon atoms, R¹, R² and R³ each independently represents a hydrogen atom, an aliphatic hydrocarbon group or an aromatic hydrocarbon group, and R¹, R² and R³ may be the same or different, and n represents a natural number of 1 to 6].

As the halogen atoms mentioned above, there may be mentioned chlorine, fluorine, bromine and iodine, among others. The above-mentioned alkoxyl groups containing 1 to 6 carbon atoms are not particularly restricted but include, for example, methoxy, ethoxy, n- or isopropoxy groups and so forth. The above-mentioned acyloxy groups containing 1 to 6 carbon atoms are not particularly restricted but include, for example, acetyloxy and propionyloxy groups. The above-mentioned aliphatic hydrocarbon groups are not particularly restricted but include, among others, methyl, ethyl and n- or isopropyl groups. The above-mentioned aromatic hydrocarbon groups are not particularly restricted but includes, among others, phenyl and methylphenyl groups.

The compound represented by the general formula (1) serves as an initiator and presumably forms a carbocation in the presence of a Lewis acid or the like, which serves as an initiation site for cationic polymerization. As examples of the compound of general formula (A) to be used in the practice of the invention, there may be mentioned, among others, such compounds as those given below.
(1-Chloro-1-methylethyl) benzene [C₆H₅C(CH₃)₂Cl], 1,4-bis(1-chloro-1-methylethyl)benzene [1,4-Cl(CH₃)₂CC₆H₄C(CH₃)₂Cl], 1,3-bis(1-chloro-1-methylethyl)benzene [1,3-Cl(CH₃)₂CC₆H₄C(CH₃)₂Cl], 1,3,5-tris(1-chloro-1-methylethyl)benzene [1,3,5-(ClC(CH₃)₂)₃C₆H₃] and 1,3-bis(1-chloro-1-methylethyl)-5-(tert-butyl)benzene [1,3-(C(CH₃)₂Cl)₂-5-(C(CH₃)₃)C₆H₃].

Among these, (1-chloro-1-methylethyl)benzene [C₆H₅C(CH₃)₂Cl], bis(1-chloro-1-methylethyl)benzene [C₆H₄(C(CH₃)₂Cl)₂] and tris(1-chloro-1-methylethyl)benzene [(ClC(CH₃)₂)₃C₆H₃] are particularly preferred. [(1-Chloro-1-methylethyl)benzene is also called (α-chloroisopropyl)benzene, (2-chloro-2-propyl)benzene or cumyl chloride, bis(1-chloro-1-methylethyl)benzene is also called bis(α-chloroisopropyl)benzene, bis(2-chloro-2-propyl)benzene or dicumyl chloride, and tris(1-chloro-1-methylethyl)benzene is also called tris(α-chloroisopropyl)benzene, tris(2-chloro-2-propyl)benzene or tricumyl chloride.]

On the occasion of the production of the isobutylene-based block copolymer (B1) by polymerization, a Lewis acid catalyst may further be caused to coexist. Such Lewis acid catalyst may be any of those which can be used in cationic polymerization; thus, metal halides such as TiCl₄, TiBr₄, BCl₃, BF₃, BF₃·OEt₂, SnCl₄, SbCl₅, SbF₅, WCl₆, TaCl₅, VCl₅, FeCl₃, ZnBr2, AlCl₃ and AlBr₃; and organometal halides such as Et₂AlCl, Me₂ALCl and EtAlCl₂ can be suitably used. Among them, TiCl₄, BCl₃ and SnCl₄ are preferred in view of their ability as catalysts and their ready commercial availability. The level of use of the Lewis acid is not particularly restricted but can be selected according to the polymerization characteristics of the monomers employed and/or the polymerization concentration, among others. Generally, the Lewis acid can be used at levels of 0.1 to 100 mole equivalents, preferably 1 to 50 mole equivalents, relative to the compound represented by the general formula (1).

In polymerizing the isobutylene-based block copolymer (B1), an electron donor component may further be used according to need. This electron donor component is considered to be effective in stabilizing the growing carbocations on the occasion of cationic polymerization and, when such an electron donor is added, a structurally controlled polymer with a narrow molecular weight distribution is formed. The electron donor component to be used is not particularly restricted but includes, for example, pyridines, amines, amides, sulfoxides, esters, and metal compound containing a metal atom-bound oxygen atom(s), among others.

The polymerization for producing the isobutylene-based block copolymer (B1) can be carried out in an organic solvent according to need, and any organic solvent that will not essentially disturb the cationic polymerization, without any particular restriction. More specifically, there may be mentioned, among others, halogenated hydrocarbons such as methyl chloride, dichloromethane, chloroform, ethyl chloride, dichloroethane, n-propyl chloride, n-butyl chloride and chlorobenzene; benzene and alkylbenzenes such as toluene, xylene, ethylbenzene, propylbenzene and butylbenzene; straight chain aliphatic hydrocarbons such as ethane, propane, butane, pentane, hexane, heptane, octane, nonane and decane; branched aliphatic hydrocarbons such as 2-methylpropane, 2-methylbutane, 2,3,3-trimethylpentane and 2,2,5-trimethylhexane; cyclic aliphatic hydrocarbons such as cyclohexane, methylcyclohexane and ethylcyclohexane; and paraffin oils derived from petroleum fractions by purification by hydrogenation.

These solvents are used either singly or in combination of two or more of them considering, from the balance viewpoint, the polymerization characteristics of the monomers to constitute the isobutylene-based block copolymer (B1) and the solubility and other properties of the polymer to be formed. Considering the viscosity of the polymer solution to be obtained and the ease in removing heat, the amount of the solvent to be used is determined so that the polymer concentration may amount to 1 to 50% by weight, preferably 5 to 35% by weight.

In actually carrying out the polymerization, the respective components are mixed up with cooling, for example at a temperature not lower than -100°C but lower than 0°C. A particularly preferred temperature range for balancing the energy cost against the stability of polymerization is -30°C to -80°C. The above polymerization reaction may be carried out in a batchwise (batchwise or semibatchwise) manner, or may be carried out while feeding the components necessary for the polymerization reaction continuously to the polymerization vessel.

For the purpose of improving the tackiness or adhesiveness of the composition of the invention to glass panes, and the like purposes, thermoplastic resins containing one or more of various functional groups within the molecular chain or at the molecular chain terminus or termini can be used as the thermoplastic resin (B). As the functional groups, there may be mentioned, for example, an epoxy group, a hydroxyl group, an amino group, aminoalkyl groups, ether groups such as alkoxyl groups, a carboxyl group, ester groups such as alkoxycarbonyl and acyloxy groups, amide groups such as a carbamoyl group and alkylcarbomoyl and acylamino groups, acid anhydride groups such as a maleic anhydride group, silyl groups, an allyl group and a vinyl group, among others. The thermoplastic resin (B) may contain only one species or two or more species of the functional groups mentioned above.

Either one single species or a combination of two or more these species of thermoplastic resin (B) can be used, irrespective whether it or they belongs or belong to the category of plastics, rubbers or thermoplastic elastomers. The level of addition thereof is not particularly restricted but preferably is 1 to 300 parts by weight, more preferably 10 to 200 parts by weight, per 100 parts by weight of the isobutylene-based copolymer (A).

The compound (C) is a compound containing at least two hydrosilyl groups within the molecule thereof. The phrase "containing at least two hydrosilyl groups within the molecule thereof" as used herein means that the compound contains 2 or more hydrosilyl groups, on an average, per molecule. In cases where two hydrogen atoms are bound to one and the same silicon atom, they are calculated as two silicon atom-bound hydrogen atoms (hydrosilyl groups).

It is desirable that one or more of these hydrosilyl groups be chemically bound to a terminal alkenyl group(s) of the isobutylene-based copolymer (A) and/or the compound (D) having a carbon-carbon unsaturated bond-containing functional group, which is to be described later herein, as a result of the hydrosilylation reaction. It is particularly desirable that one hydrosilyl group be bound to a terminal alkenyl group of the isobutylene-based copolymer (A) and another hydrosilyl group be bound to the carbon-carbon unsaturated bond-containing functional group-containing compound (D) to be described later herein. In such a mode of bonding, the resulting composition is provided with a satisfactory level of adhesion durability.

As a preferred type of the compound (C) containing, on an average, at least two hydrosilyl groups per molecule, there may be mentioned polyorganohydrogensiloxanes (C1) containing, on an average, 2 or more hydrosilyl groups per molecule. The number of siloxane units in the polyorganohydrogensiloxanes (C1) is preferably 2 to 500, more preferably 2 to 200. When the number of siloxane units exceeds 500, the polysiloxanes become highly viscous and are dispersed in the isobutylene-based polymer (A) only to an insufficient extent and, accordingly, the reaction readily proceeds inhomogeneously.

As the siloxane units to be employed in the practice of the invention, there may be mentioned those represented by the following general formula (2) to (4). Among them, those of general formula (3) contain a hydrosilyl group.

[Si(R¹)₂O] (2)

[si(H)(R²)O] (3)

[Si(R²)(R³)O] (4)

Usable as the polyorganohydrogensiloxanes (C1) containing 2 or more hydrosilyl groups and containing 2 to 500 siloxane units are such compounds as linear polysiloxanes represented by the following general formula (5) or (6): 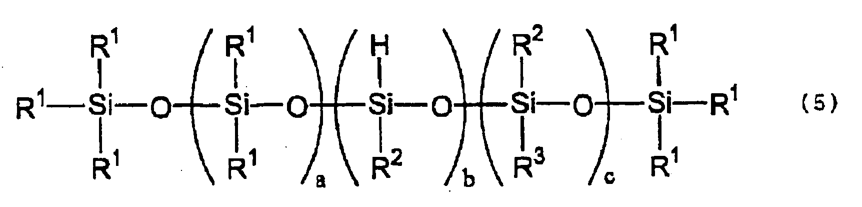 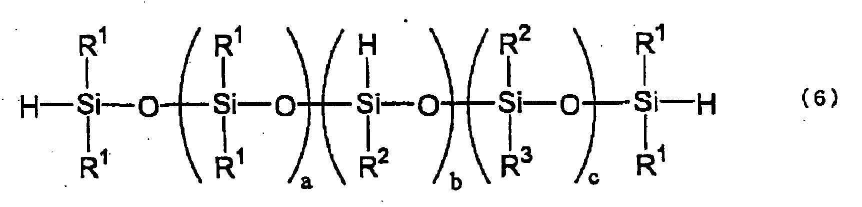 (In the above formulas, R¹ and R² each independently represents an alkyl group containing 1 to 18 carbon atoms, an aryl group containing 6 to 18 carbon atoms, a halogenated alkyl group containing 1 to 18 carbon atoms, a halogenated aryl group containing 6 to 18 carbon atoms, an alkoxy group containing 1 to 6 carbon atoms, an aryloxy group containing 6 to 10 carbon atoms or a chlorine atom, R³ represents an alkyl group containing 1 to 18 carbon atoms, an aryl group containing 6 to 18 carbon atoms, a halogenated alkyl group containing 1 to 18 carbon atoms, a halogenated aryl group containing 6 to 18 carbon atoms, an alkoxy group containing 1 to 6 carbon atoms, an aryloxy group containing 6 to 10 carbon atoms, a chlorine atom or an aralkyl group containing 7 to 18 carbon atoms, and a, b and c respectively represent integers satisfying the relations a ≥ 0, b ≥ 2, c ≥ 0, 2 ≤ a + b + c ≤ 500.) Also usable are such compounds as cyclic polysiloxanes represented by the following general formula (7) : 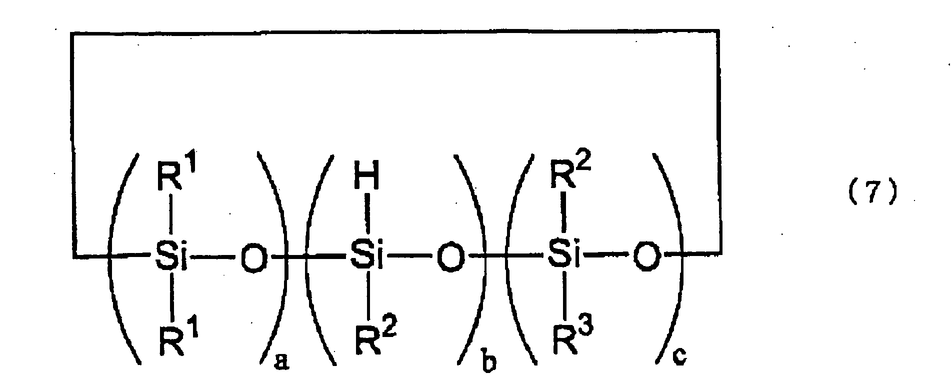 (In the formula, R¹ and R² each independently represents an alkyl group containing 1 to 18 carbon atoms, an aryl group containing 6 to 18 carbon atoms, a halogenated alkyl group containing 1 to 18 carbon atoms, a halogenated aryl group containing 6 to 10 carbon atoms, an alkoxy group containing 1 to 6 carbon atoms, an aryloxy group containing 6 to 10 carbon atoms or a chlorine atom, R³ represents an alkyl group containing 1 to 18 carbon atoms, an aryl group containing 6 to 18 carbon atoms, a halogenated alkyl group containing 1 to 18 carbon atoms, a halogenated aryl group containing 6 to 18 carbon atoms, an alkoxy group containing 1 to 6 carbon atoms, an aryloxy group containing 6 to 10 carbon atoms, a chlorine atom or an aralkyl group containing 7 to 18 carbon atoms, and a, b and c respectively represent integers satisfying the relations a ≥ 0, b ≥ 2, c ≥ 0, 2 ≤ a + b + c ≤ 500.)

When, in the general formulas (2) to (7), R¹, R² and/or R³ is an alkyl group containing 1 to 18 carbon atoms, there may be mentioned, for example, methyl, ethyl, n-propyl, isopropyl, n-butyl, tert-butyl, n-pentyl, cyclohexyl, n-octyl, nonyl, undecyl and heptadecyl groups, among others. When, in the general formulas (2) to (7), R¹, R² and/or R³ is an aryl group containing 6 to 18 carbon atoms, there may be mentioned, for example, phenyl, p-methylphenyl, p-methoxyphenyl and p-tert-butylpehenyl groups, among others.

When, in the general formulas (2) to (7), R¹, R² and/or R³ is a halogenated alkyl group containing 1 to 18 carbon atoms, each halogen atom is preferably F, Cl or Br. As such group, there may be mentioned, for example, chloromethyl, fluoromethyl, 2-chloroethyl, 1,1,2,2,2-pentafluoroethyl and 3,3,3-trifluoropropyl groups. When, in the general formulas (2) to (7), R¹, R² and/or R³ is a halogenated aryl group containing 6 to 10 carbon atoms, each halogen atom is preferably F, Cl or Br. Thus, for example, there may be mentioned p-chlorophenyl, m-chlorophenyl, m-chloro-p-methylphenyl and m-chloro-p-methoxyphenyl groups, among others.

When, in the general formulas (2) to (7), R¹, R² and/or R³ is an alkoxy group containing 1 to 6 carbon atoms, there may be mentioned, for example, methoxy, ethoxy, n-propoxy, isopropoxy, n-butoxy, n-pentyloxy, n-hexyloxy, cyclopentyloxy, cyclohexyloxy, 2-methoxyethoxy and 2-ethoxyethoxy groups. When, in the general formulas (2) to (7), R¹, R² and/or R³ is an aryloxy group containing 6 to 10 carbon atoms, there may be mentioned, for example, phenoxy, p-methylphenoxy, p-methoxyphenoxy, p-chlorophenoxy and m-chlorophenoxy groups, among others.

When, in the general formulas (4) to (7), R³ is an aralkyl group containing 7 to 18 carbon atoms, there may be mentioned, for example, benzyl, phenylethyl, phenylpropyl, 1-phenyl-1-methylethyl and 4-methylphenylethyl groups, among others.

The compound (C) containing at least two hydrosilyl groups within the molecule thereof which is to be used in the practice of the invention is preferably the one showing good compatibility with the isobutylene-based polymer (A) and other components or showing good dispersion stability in the system. A plurality of species of the compound (C) may also be used in combination. The compound (C) may further comprise a compound other than the hydrosilyl group-containing compound.

For obtaining a high level of rubber elasticity suited as a sealing material, it is desirable that the compound (C) contain three or more hydrosilyl groups in each molecule thereof. In this case, a sufficient crosslink network growth can be attained owing to the hydrosilylation reaction to be described later herein. When, in this manner, the crosslinking reaction is carried out efficiently using a compound containing three or more hydrosilyl groups within each molecule, the content of the compound containing at least three hydrosilyl groups in the whole hydrosilyl group-containing compound (C) is preferably not less than 10% by weight.

The isobutylene-based polymer (A) and the compound (C) can be mixed in an arbitrary ratio. From the hydrosilylation reaction viewpoint, however, the mole ratio of the alkenyl group in the isobutylene-based polymer (A) to the hydrosilyl group in the compound (C), namely the ratio (alkenyl group/hydrosilyl group), is preferably within the range of 0.01 to 10, more preferably 0.03 to 5. When the mole ratio is higher than 10, the hydrosilylation reaction becomes insufficient and the strength and adhesion of the sealing material composition readily decrease. When it is lower than 0.01, active hydrosilyl groups remain abundantly in the composition and cracks and voids are readily formed and there is a tendency toward failure to obtain a uniform and tenacious composition.

In the sealing material composition of the invention, it is preferred from the shape retention at elevated temperatures that the isobutylene-based polymer (A) be crosslinked by hydrosilylation with the compound (C) . As for the crosslinking by hydrosilylation with the compound (C), the isobutylene-based polymer (A) may be either partly crosslinked or wholly crosslinked.

The crosslinking of the isobutylene-based polymer (A) by hydrosilylation with the compound (C) may be carried out in any stage. From the viewpoint of the rigidity and rubberlike elasticity of the composition, however, the crosslinking is preferably carried out dynamically in the step of melt kneading with the thermoplastic resin (B).

In the practice of the invention, the hydrosilylation reaction (crosslinking) between the compound (C) and the isobutylene-based polymer (A) and/or the compound (D) to be described later herein proceeds upon mixing up them and heating. For allowing the reaction to proceed more rapidly, however, a hydrosilylation catalyst can be added as a reaction catalyst. Such hydrosilylation catalyst is not particularly restricted but may be, for example, a radical initiator such as an organic peroxide or azo compound, or a transition metal catalyst.

The organic peroxide is not particularly restricted but includes, for example, dialkyl peroxides such as di-tert-butyl peroxide, 2,5-dimethyl-2,5-di(tert-butylperoxy)hexane, 2,5-dimethyl-2,5-di(tert-butylperoxy)-3-hexyne, dicumyl peroxide, tert-butyl cumyl peroxide and α,α'-bis(tert-butylperoxy)isopropylbenzene, acyl peroxides such as benzoyl peroxide, p-chlorobenzoyl peroxide, m-chlorobenzoyl peroxide, 2,4-dichlorobenzoyl peroxide and lauroyl peroxide, peracid esters such as tert-butyl perbenzoate, peroxydicarbonates such as diisopropyl peroxydicarbonate and di-2-ethylhexyl peroxydicarbonate, and peroxyketals such as 1,1-di(tert-butylperoxy)cyclohexane and 1,1-di(tert-butylperoxy)-3,3,5-trimethylcyclohexane, among others.

The azo compound is not particularly restricted but includes, for example, 2,2'-azobisisobutyronitrile, 2,2'-azobis-2-methylbutyronitrile, 1,1'-azobis-1-cyclohexanecarbonitrile, 2,2'-azobis(2,4-dimethylvaleronitrile) and 2,2'-azoisobutyrovaleronitrile, among others.

The transition metal catalyst is not particularly restricted but includes, for example, platinum as a simple substance, solid platinum carried on such a support as alumina, silica or carbon black, chloroplatinic acid, complexes of chloroplatinic acid with alcohols, aldehydes, ketones or the like, platinum-olefin complexes, and platinum-allylsiloxanes such as platinum(0)-diallyltetramethyldisiloxane complex, among others. As catalysts other than platinum compounds, there may be mentioned RhCl(PPh₃)₃, RhCl₃, RuCl₃, IrCl₃, FeCl₃, AlCl₃, PdCl₂·H₂O, NiCl₂ and TiCl₄, among others. These catalysts may be used singly or two or more species thereof may be used in combination. Among these, platinum-allylsiloxanes are the most preferred from the compatibility and reaction efficiency viewpoint.

The level of addition of the hydrosilylation catalyst is not particularly restricted but recommendably is within the range of 10⁻¹ to 10⁻⁸ mole, preferably within the range of 10⁻² to 10⁻⁷ mole, with the sum of the number of moles of alkenyl group in the isobutylene-based polymer (A) and/or of the carbon-carbon unsaturated bond in the compound (D) being taken as 1 mole. At levels lower than 10⁻⁸ mole, there is a tendency for the hydrosilylation reaction to hardly proceed to a sufficient extent. Further, since the hydrosilylation catalyst is expensive, it is not preferable to use it at levels exceeding 10⁻¹ mole.

In the sealing material composition of the invention, there may be further incorporated an appropriate amount of a carbon-carbon unsaturated bond-containing functional group-containing compound (D) different from the component (A) for improving the retention of adhesion to such substrates as glass panes.

Like in the case of the reaction of the alkenyl group in the above-mentioned isobutylene-based polymer (A) with the hydrosilyl group in the compound (C), the carbon-carbon unsaturated bond-containing function group-containing compound (D) is preferably in a chemically bound state as a result of the hydrosilylation reaction with the hydrosilyl group in the hydrosilyl group-containing compound (C). The compound (D) is not particularly restricted but may be any compound containing one carbon-carbon double bond reactive with the hydrosilyl group in each molecule. Preferably, it contains no other constituent elements than C, H, N, O, S and a halogen atom(s) . The site of binding of the carbon-carbon double bond reactive with the hydrosilyl group is not particularly restricted but may occur at any site in the molecule.

The compound (D) may be classified as a polymeric compound or a monomeric compound. Usable as the polymeric compound are, for example, polysiloxane type, polyether type, polyester type, polyarylate type, polycarbonate type, saturated polymeric hydrocarbon type (other than polyisobutylene type), unsaturated polymeric hydrocarbon type, polyacrylic ester type, polyamide type, phenolformaldehyde polymer (phenol resin) type and polyimide type compounds.

As the monomeric compound, there may be mentioned, for example, aromatic hydrocarbon type, such as phenolic type, bisphenol type, benzene and naphthalene; aliphatic hydrocarbon type, such as straight chain type and alicyclic type; and heterocyclic type compounds, silicone type compounds, and mixtures of these, among others.

The carbon-carbon double bond reactive with the hydrosilyl group in the compound (D) is not particularly restricted but groups represented by the following general formula (8): 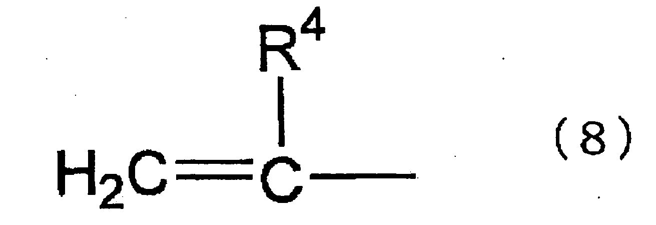 (wherein R⁴ represents a hydrogen atom or a methyl group) are suitable from the reactivity viewpoint. From the ready availability of raw material viewpoint, the group represented by: 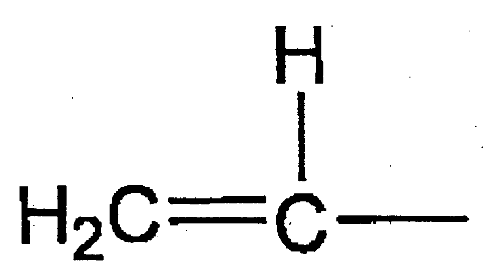 :is particularly preferred.

Also preferred as the carbon-carbon double bond reactive with the hydrosilyl group in the compound (D) are alicyclic groups represented by the general formula (9): 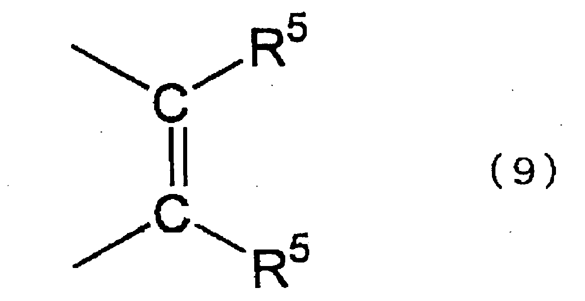 (wherein R⁵ represents a hydrogen atom or a methyl group) since they can improve the thermal stability of the sealing material composition. From the ready availability of raw material viewpoint, the alicyclic group represented by: 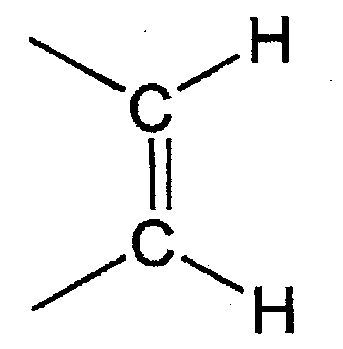 :is particularly preferred.

The carbon-carbon double bond reactive with the hydrosilyl group may be directly bound to the skeletal portion of the compound (D) or may be covalently bonded thereto via an at least divalent substituent. The at least divalent substituent is not particularly restricted but may be any substituent containing 0 to 10 carbon atoms. From the viewpoint that the compatibility with the isobutylene-based polymer (A) may readily be improved, it preferably contains no constituent elements other than C, H, N, O, S and a halogen(s). As examples of such substituent, there may be mentioned the following.

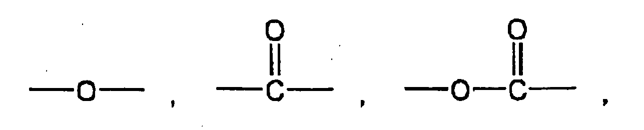

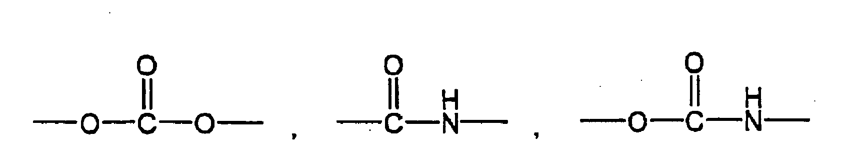

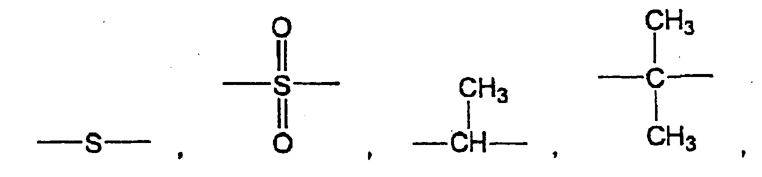

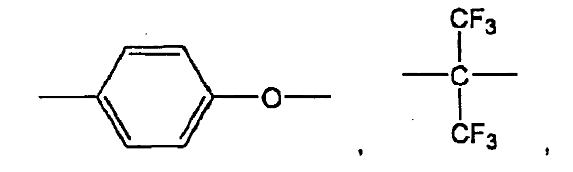

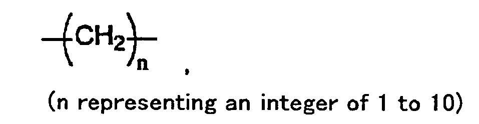

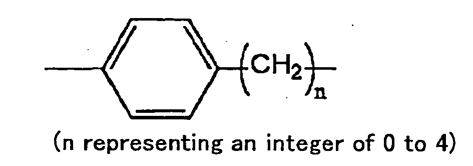

As specific examples of the compound (D), there may be mentioned chain-structured aliphatic hydrocarbon compounds such as propene, 1-butene, 1-pentene, 1-hexene, 1-heptene, 1-octene, 1-nonene, 1-decene, 1-dodecene, 1-undecene, Linealene species (products of Idemitsu Petrochemical), 4,4-dimethyl-1-pentene, 2-methyl-1-hexene, 2,3,3-trimethyl-1-butene and 2,4,4-trimethyl-1-pentene, cyclic aliphatic hydrocarbon compounds such as cyclohexene, methylcyclohexene, methylenecyclohexane, norbornylene, ethylidenecyclohexane, vinylcyclohexane, camphene, carene, α-pinene and β-pinene, aromatic hydrocarbon compounds such as styrene, α-methylstyrene, indene, phenylacetylene, 4-ethynyltoluene, allylbenzene and 4-phenyl-1-butene, allyl ethers such as alkyl allyl ethers and allyl phenyl ether, aliphatic compounds such as glycerol mono allyl ether, ethylene glycol monoallyl ethers and 4-vinyl-1,3-dioxolan-2-one, aromatic compounds such as 1,2-dimethoxy-4-allylbenzene and o-allylphenol, substituted isocyanurates such as monoallyl dibenzyl isocyanurate and monoallyl diglycidyl isocyanurate, and silicone compounds such as vinyltrimethylsilane, vinyltrimethoxysilane and vinyltriphenylsilane, among others. There may further be mentioned polyether type resins such as polyethylene oxide allylated at one end and polypropylene oxide allylated at one end, acrylic resins such as polybutyl acrylate allylated at one end and polymethyl methacrylate allylated at one end, and other polymers or oligomers allylated at one end, among others.

The structure may be linear or branched, and the molecular weight is not particularly restricted but a variety of molecular weights can be used. The molecular weight distribution is not particularly restricted, either. From the viewpoint that the viscosity of the mixture is reduced and the moldability is readily improved, the molecular weight distribution is preferably not higher than 3, more preferably not higher than 2, still more preferably not higher than 1.5.

The compound (D) preferably contains a reactive group other than the carbon-carbon double bond. The reactive group in that case includes an epoxy group, alkoxy groups, an amino group, radical polymerizable unsaturated groups, a carboxyl group, a carboxylic acid anhydride group, an isocyanato group, a hydroxyl group, halogen atoms and alkoxysilyl groups, among others. When the compound (D) contains such as functional group, the adhesiveness of the sealing material composition obtained tends to become increased. From the viewpoint that the adhesiveness can be more improved, an epoxy group is preferred among these functional groups. Further, from the viewpoint that the adhesiveness is readily improved, the compound (D) preferably contains, on an average, one or more reactive groups per molecule. More specifically, there may be mentioned monoallyl diglycidyl isocyanurate, allyl glycidyl ether, allyloxyethyl methacrylate, allyloxyethyl acrylate and vinyltrimethoxysilane, among others.

Such compounds (D) as enumerated above may be used singly or a plurality thereof may be used in combination.

The compound (D) can be incorporated in the composition in an arbitrary ratio. From the hydrosilylation reaction viewpoint, however, the mole ratio (carbon-carbon double bond/hydrosilyl group) between the carbon-carbon double bond in the compound (D) and the hydrosilyl group in the compound (C) is preferably within the range of 0.01 to 10, more preferably 0.02 to 5. When that mole ratio exceeds 10, the hydrosilylation reaction becomes insufficient and the adhesiveness of the sealing material composition tends to lower. When it is lower than 0.01, the active hydrosilyl group remains abundantly in the composition and cracks and voids are readily formed and there is a tendency for a uniform and tenacious composition to be hardly obtained.

The reaction which occurs among the terminal alkenyl group in the isobutylene-based copolymer (A), the hydrosilyl group in the compound (C) and the carbon-carbon unsaturated bond-containing functional group in the compound (D) is now described.

As mentioned above, the hydrosilyl group-containing compound (C) in the sealing material composition of the invention is preferably in a bound state as a result of the hydrosilylation reaction with the alkenyl group-terminated isobutylene-based polymer (A) and/or the carbon-carbon unsaturated bond-containing functional group-containing compound (D). In subjecting the compound (C) to the hydrosilylation reaction with the both components, namely the isobutylene-based polymer (A) and compound (D), such means as i) the method comprising reacting the compound (C) with the isobutylene-based polymer (A) and then adding the compound (D) for the reaction of the compound (C) with the compound (D), ii) the method comprising reacting the compound (C) with the compound (D) and then adding the isobutylene-based polymer (A) for the reaction of the compound (C) with the isobutylene-based polymer (A) and iii) the method comprising reacting the isobutylene-based polymer (A) and compound (D) simultaneously with the compound (C). The method to be employed is not particularly restricted, however.

The above-mentioned hydrosilylation crosslinking of the isobutylene-based polymer (A) with the compound (C) is accomplished in a state in which these two components are contained in the system. It is also accomplished under the conditions such that the compound (D) is further contained in the system. Further, the means can also be employed by which the compound (C) functionalized by the compound (D) is prepared by reacting the compound (D) with the compound (C) in the manner of hydrosilylation and then the hydrosilyl group remaining in the compound (C) is further bound to the terminal alkenyl group in the isobutylene-based polymer (A) in the manner of hydrosilylation. The method to be employed is not particularly restricted, however.

In the sealing material composition of the invention, there may further be incorporated at least one nitrogen atom-containing compound (E) selected from the group consisting of amines, amides and carboxylic acid hydrazides at an appropriate addition level so that the retention of adhesion to such substrates as glass panes maybe improved. The nitrogen atom-containing compound (E) selected from the group consisting of amines, amides, hydrazines and carboxylic acid hydrazides is effective in increasing the long-term adhesion to substrates. Such nitrogen atom-containing compound (E) is not particularly restricted but may be any of those containing the functional group of an amine, amide, hydrazine or carboxylic acidhydrazide. The amines are only required to contain such an amino group(s) as the (-NH₂) and/or (-NH-) group(s); the amides are only required to contain such an amide groups (s) as (-CO·NH₂) and/or (-CO·NH-) group and/or ((-CO)₂·NH) group (s); the hydrazides are only required to contain such a hydrazide group(s) as the (-NH·NH₂) and/or (-NH·NH-) group(s); and the carboxylic acid hydrazides are only required to contain such a carboxylic acid hydrazide group(s) as the (-CO·NH·NH₂) and/or (-CO·NH·NH-) group (s). Each molecule may contain at least one of such nitrogen-containing functional groups or a plurality of species thereof. The functional group other than the amino, amide, hydrazide and carboxylic acid hydrazide groups, which may occur in the nitrogen atom-containing compound (E) is not particularly restricted but may be any of those which can be used, including, for example, vinyl, methacryl, acryl, mercapto, hydroxyl, isocyanato and glycidyl groups.

As specific examples of such nitrogen atom-containing compound (E), there may be mentioned acyclic amines such as methylamine (CH₃·NH₂), dimethylamine ((CH₃)₂·NH), ethylenediamine (NH₂·CH₂·CH₂·NH₂) and hexamethylenediamine (NH₂·(CH₂)₆·NH₂); saturated alicyclic amines; unsaturated alicyclic amines; cycloterpeneamines; aromatic amines such as aniline (C₆H₅·NH₂), chloroaniline (Cl·C₆H₄·NH₂), diphenylamine ((C₆H₅)₂·NH), 1-naphthylamine ((C₁₀H₇·NH₂), phenylenediamine (C₆H₄(NH₂)₂) and benzidine (NH₂·C₆H₄·C₆H₄·NH₂); aminoalcohols such as monoaminoethanol (NH₂(C₂H₄OH)); aminoaldehydes such as aminobenzaldehyde; aminoketones; amino acids such as glycine (NH₂·CH₂·COOH) and sarcosine (CH₃·NH·CH₂·COOH); amides such as hexanamide (C₅H₁₁·CO·NH₂), succinamide (H₂N·CO·C₂H₄·CO·NH₂), 4-acetamidobenzoic acid (p-(CH₃·CO·NH)·C₆H₄·COOH) and adipic acid diamide (H₂N·CO·(CH₂)₄·CO·NH₂); dicyandiamide (H₂N·C(NH)·NH·CN); hydrazines such as 1,1-dimethyldiazine (H₂N·N(CH₃)₂) and 1, 2-diphenyldiazine ((C₆H₅·NH·NH·(C₆H₅)); and carboxylic acid hydrazides such as acetohydrazide (CH₃·CO·NH·NH₂), benzohydrazide (C₆H₅·CO·NH·NH₂), cyclohexanecarbohydrazide (c-C₆H₁₁·CO·NH·NH₂), adipic acid dihydrazide (H₂N·NH·CO·(CH₂)₄·CO·NH·NH₂) and isophthalic acid dihydrazide (m-C₆H₄·(CO·NH·NH₂)₂), among others. Among these, hexamethylenediamine, benzidine, dicyandiamide, adipic acid dihydrazide, isophthalic acid dihydrazide and the like are preferred, and carboxylic acid dihydrazides such as adipic acid dihydrazide and isophthalic acid dihydrazide are preferred from the glass adhesion viewpoint, in particular.

The nitrogen atom-containing compound (E) may comprise one single species or a mixture of two or more species and is preferably used in an amount within the range of 0.01 to 50 parts by weight, in particular within the range of 0.1 to 30 parts by weight, per 100 parts by weight of the alkenyl group-terminated isobutylene-based polymer (A).

When the nitrogen atom-containing compound (E) is a solid at ordinary temperature, the particle diameter thereof is preferably not greater than 1 mm, more preferably not greater than 200 µm. When the particle diameter is 1 mm or greater, the dispersibility becomes poor and it becomes difficult to attain good adhesiveness.

In the sealing material composition of the invention, there may further be incorporated, according to the required characteristics adequate for each individual field of use, the tackifier resin (F), inorganic filler (G), plasticizer (H) and/or alkoxysilane compound (I), each at an appropriate addition level.

The tackifier resin (F) is a low-molecular-weight resin having a number average molecular weight of 300 to 3,000 and a softening point of 60 to 150°C as determined by the ring ball method according to JIS K 2207 and, as examples thereof, there may be mentioned rosin and rosin derivatives, polyterpene resins, aromatic-modified terpene resins and hydrogenation products derived therefrom, terpenephenol resins, coumarone-indene resins, aliphatic petroleum resins, alicyclic petroleum resins and hydrogenation products derived therefrom, aromatic petroleum resins and hydrogenation products derived therefrom, aliphatic aromatic copolymer type petroleum resins, dicyclopentadiene-based petroleum resins and hydrogenation products derived therefrom, and styrene- or substituted styrene-derived low-molecular-weight polymers.

Such a tackifier resin (F) is effective in enhancing the hot melt tackiness or adhesiveness. For achieving such object, the tackifier resin (F) compatible with the isobutylene-based polymer (A) is desirably incorporated in the composition. Suitably used as such tackifier resin (F) are, for example, alicyclic petroleum resins and hydrogenation products derived therefrom, aliphatic petroleum resins, aromatic petroleum resins and hydrogenation products derived therefrom, and polyterpene resins.

The amount of the tackifier resin (F) to be added is not particularly restricted but preferably 1 to 300 parts by weight per 100 parts by weight of the isobutylene-based polymer (A) and, from the viewpoint of balance between gas barrier properties and tackiness or adhesiveness, it is more preferably 1 to 100 parts by weight on the same basis.

The inorganic filler (G) is effective in improving the rigidity of the sealing material composition of the invention and is also effective in improving the shape retention characteristics in the application temperature range and in preventing sagging on the occasion of hot melt application. The inorganic filler (G) is not particularly restricted but any of those known in the art can be used. For example, at least one species selected from the group consisting of calcium carbonate, magnesium carbonate, fused silica, crystalline silica, diatomaceous earth, clay, talc, mica, kaolin, titanium oxide, zinc oxide, carbon black, bentonite, aluminum hydroxide, magnesium hydroxide, barium sulfate, calcium sulfate and the like can be used. Among these, carbon black, which is effective in improving the rigidity at lower addition levels, is particularly preferred, and those species thereof which are highly capable of absorbing oils are more preferably used.

The level of incorporation of the inorganic filler (G) is preferably 1 to 200 parts by weight per 100 parts by weight of the isobutylene-based polymer (A). This is because the addition of an excessive amount of the inorganic filler (G) results in deterioration in flowability in the step of hot melt application.

As examples of the plasticizer (H), there may be mentioned petroleum-derived process oils such as paraffin-based process oils, naphthene-based process oils and aromatic-based process oils, dibasic acid dialkyl esters such as diethyl phthalate, dioctyl phthalate and dibutyl adipate, and low-molecular-weight liquid polymers such as liquid polybutene, liquid polyisobutylene and liquid polyisoprene, among others; any of these can be used. Such plasticizers are effective in improving the flowability on the occasion of hot melt application and, for attaining such purpose, it is desirable that a plasticizer compatible with the isobutylene-based polymer (A) be incorporated so as to prevent the phenomenon of bleedout; thus, paraffin-based process oils, liquid polybutene and liquid polyisobutylene, among others, are suitably used.

The level of incorporation of the plasticizer is not particularly restricted but, generally, it is 1 to 300 parts by weight, preferably 1 to 100 parts by weight, per 100 parts by weight of the isobutylene-based polymer (A).

The alkoxysilane compound (I) is a compound containing an alkoxysilyl group; it is effective in increasing the long-term adhesion to substrates and can be used properly according to the characteristics requirements. The alkoxysilyl group species is not particularly restricted so long as it can be used but includes, for example, hydrolysable group-containing ones such as methoxysilyl, ethoxysilyl, propoxysilyl and oximesilyl. The functional group other than the alkoxysilyl group, which may be present in the alkoxysilane compound, is not particularly restricted so long as it can be used; as examples, there may be mentioned vinyl, methacryl, acryl, mercapto, hydroxyl, isocyanato, amino, amido, glycidyl and like groups. As more specific examples, there may be mentioned ethyl silicate, silicate condensates, vinyltrimethoxysilane, 3-methacryloxypropyltrimethoxysilane, 3-aminopropyltrimethoxysilane, 3-aminopropylmethyldimethoxysilane, 3-aminopropylmethyldiethoxysilane, 3-aminopropyltriethoxysilane, N-methyl-3-aminopropyltrimethoxysilane, N-phenyl-3-aminopropyltrimethoxysilane, N-(β-aminoethyl)aminopropylmethyldimethoxysilane, 3-isocyanatopropyltrimethoxysilane, 3-isocyanatopropyltriethoxysilane and 3-glycidylpropyltrimethoxysilane, among others. Among them, those alkoxysilane compounds which contain an amino, isocyanato or epoxy group are particularly preferred from the viewpoint of the adhesion of the sealing material composition of the invention to glass.

The alkoxysilane compound to be used may comprise one single species or a mixture of two or more species and is preferably used in an amount within the range of 0.01 to 50 parts by weight per 100 parts by weight of the isobutylene-based polymer (A). In particular, the use thereof within the range of 0.1 to 30 parts by weight is preferred.

It is possible to further add a desiccant to the sealing material composition of the invention. As examples of the desiccant, there may be mentioned zeolite, silica gel and alumina; any of these can be used. Such desiccant can reduce the water vapor permeability of the sealing material composition of the invention and can prevent the air gap portion sandwiched between the double glazed panes of glass from becoming cloudy due to moisture. The level of addition of the desiccant is preferably 1 to 100 parts by weight per 100 parts of the isobutylene-based polymer (A).

Further, one or more of antioxidants, ultraviolet absorbers, light stabilizers, pigments, surfactants, flame retardants and other additives can be incorporated in the sealing material composition of the invention, each at an appropriate addition level at which the physical properties will not be sacrificed. It is also possible to add one or more of known antiblocking agents, antistatic agents, colorants, inorganic or organic antimicrobial agents, lubricants and so forth.

As the antioxidants, there may be mentioned those antioxidants which are generally used, for example phenolics, amines, sulfur-containing ones, phosphorus-containing ones, hydrazines and amides, among others. Phenolics and amines are radical chain inhibitors and are used as primary antioxidants. As the phenolic antioxidants, there may be mentioned, for example, 2,6-di-tert-butyl-p-cresol, 2,6-diphenyl-4-octoxyphenol, stearyl (3,5-dimethyl-4-hydroxybenzyl)thioglycolate, stearyl β-(4-hydroxy-3,5-di-tert-butylphenyl)propionate, distearyl 3,5-di-tert-butyl-4-hydroxybenzylphosphonate, 2,4,6-tris(3',5'-di-tert-butyl-4-hydroxybenzylthio)-1,3,5-triazine, distearyl (4-hydroxy-3-methyl-5-tert-butyl)benzylmalonate, 2,2'-methylenebis(4-methyl-6-tert-butylphenol), 4,4'-methylenebis(2,6-di-tert-butylphenol), 2,2'-methylenebis[6-(1-methylcyclohexyl)-p-cresol], bis[3,5-bis(4-hydroxy-3-tert-butylphenyl)butyric acid] glycol ester, 4,4'-butylidenebis(6-tert-butyl-m-cresol), 2,2'-ethylidenebis(4,6-di-tert-butylphenol), 2,2'-ethylidenebis(4-sec-butyl-6-tert-butylphenol), 1,1,3-tris(2-methyl-4-hydroxy-5-tert-butylphenyl)butane, bis[2-tert-butyl-4-methyl-6-(2-hydroxy-3-tert-butyl-5-methylbenzyl)phenyl] terephthalate, 1,3,5-tris(2,6-dimethyl-3-hydroxy-4-tert-butyl)benzyl isocyanurate, 1,3,5-(3,5-di-tert-butyl-4-hydroxybenzyl)-2,4,6-trimethylbenzene, tetrakis[methylene-3-(3,5-di-tert-butyl-4-hydroxyphenyl) propionate]methane, 1,3,5-tris(3,5-di-tert-butyl-4-hydroxybenzyl)isocyanurate, 1,3,5-tris[(3,5-di-tert-butyl-4-hydroxyphenyl) propionyloxyethyl]isocyanurate, 2-octylthio-4,6-di(4-hydroxy-3,5-di-tert-butyl)phenoxy-1,3, 5-triazine, 4,4'-thiobis(6-tert-butyl-m-cresol), 2,2'-methylenebis(6-tert-butyl-4-methylphenol)monoacrylate, triethylene glycol bis[3-(3-tert-butyl-4-hydroxy-5-methylphenyl)propionate] and 3,9-bis(1,1-dimethyl-2-hydroxyethyl)-2,4,8,10-tetraoxaspiro [5.5]undecane bis[3-(3-tert-butyl-4-hydroxy-5-methylphenyl)propionate], among others. These may be used singly or two or more of them may be used in combination.

As the amine type antioxidants, there may be mentioned, for example, phenyl-α-naphthylamine, phenyl-β-naphthylamine, N,N'-diphenyl-p-phenylenediamine, N,N'-di-β-naphthyl-p-phenylenediamine, N-cyclohexyl-N'-phenyl-p-phenylenediamine, N-phenylene-N'-isopropyl-p-phenylenediamine, 6-ethoxy-2,2,4-trimethyl-1,2-dihydroquinoline, and 2,2,4-trimethyl-1,2-dihydroquinone polymers, among others. These may be used singly or two or more of them may be used in combination.

The sulfur- or phosphorus-containing antioxidants decompose peroxides and are used as secondary antioxidants. As the sulfur-containing antioxidants, there may be mentioned, for example, thiobis(β-naphthol), thiobis (N-phenyl-β-naphthylamine), 2-mercaptobenzothiazole, 2-mercaptobenzimidazole, dodecylmercaptan, dilauryl thiodipropionate, distearyl thiodipropionate, pentaerythritol tetralaurylthiopropionate, tetramethylthiuram monosulfide, tetramethylthiuram disulfide, nickel dibutyldithiocarbamate, nickel isopropylxanthate and dioctadecyl sulfide, among others. These may be used singly or two or more of them may be used in combination.

As the phosphorus-containing antioxidants, there may be mentioned, for example, trioctyl phosphite, trilauryl phosphite, tridecyl phosphite, octyl diphenyl phosphite, tris(2,4-di-tert-butylphenyl) phosphite, triphenyl phosphite, tris(butoxyethyl)phosphite, tris(nonylphenyl)phosphite, distearyl pentaerythritol diphosphite, tetra(tridecyl) 1,1,3-tris(2-methyl-5-tert-butyl-4-hydroxyphenyl)butane diphosphite, tetra(C12-15 mixed alkyl) 4,4'-isopropylidenediphenyl diphosphite, tetra (tridecyl) 4,4'-butylidenebis(3-methyl-6-tert-butylphenol)diphosphite, tris(3,5-di-tert-butyl-4-hydroxyphenyl)phosphite, tris(mono- and di- mixed nonylphenyl)phosphite, hydrogenated 4,4'-isopropylidenediphenol polysulfide, bis(octylphenyl) bis[4,4'-butylidenebis(3-methyl-6-tert-butylphenol) 1,6-hexanediol diphosphite, phenyl 4,4'-isopropylidenediphenol pentaerythritol diphosphite, bis(2,4-di-tert-butylphneol)pentaerythritol diphosphite, bis(2,6-di-tert-butyl-4-methylphenyl)pentaerythritol diphosphite, tris[4,4'-isopropylidenebis(2-tert-butylphenol)]phosphite, phenyl diisodecyl phosphite, di(nonylphenyl)pentaerythritol diphosphite, tris(1,3-distearyloyloxyisopropyl)phosphite, 4,4'-isopropylidenebis(2-tert-butylphenol)dinonyl-phenyl phosphite, 9,10-dihydro-9-oxa-10-phosphaphenanthrene-10-oxide and tetrakis(2,4-di-tert-butylphenyl)-4,4'-biphenylenediphosphite, among others. These may be used singly or two or more of them may be used in combination.

The hydrazine type and amide type antioxidants are capable of inhibiting radical initiation and include, for example, N-salicyloyl-N'-aldehydehydrazine and N,N'-diphenyl oxide, among others.

These antioxidants may be used singly or two or more species thereof may be used in combination, irrespective type. Further, citric acid and phosphoric acid, among others, may be mentioned as antioxidant effect improving agents when used in combination with antioxidants.

As the ultraviolet absorbers, there may be mentioned those ultraviolet absorbers which are in general use, for example, benzophenone type ones such as 2-hydroxybenzophenone, 2,4-dihydroxybenzophenone, 2,2',4-trihydroxybenzophenone, 2,2',4,4'-tetrahydroxybenzophenone, 2-hydroxy-4-methoxybenzophenone, 2-hydroxy-4-octoxybenzophenone, 2-hydroxy-4-methylbenzophenone, 2-hydroxy-4-chlorobenzophenone, 2,2'-dihydroxy-4-methoxybenzophenone and 2,2'-dihydroxy-4,4'-dimethoxybenzophenone; salicylate type ones such as phenyl salicylate and 2,4-di-tert-butylphenyl-3,5-di-tert-butyl-4-hydroxybenzoate ;benzotriazole type ones such as 2-(5-methyl-2-hydroxyphenyl)benzotriazole, 2-[2-liydroxy-3,5-bis(a,a-dimethylbenzyl)phenyl]-2H-benzotriazole, 2-(3,5-di-tert-butyl-2-hydroxyphenyl)benzotriazole, 2-(3-tert-butyl-5-methyl-2-hydroxyphenyl)-5-chlorobenzotriazole, 2-(3,5-di-tert-butyl-2-hydroxyphenyl)-5-chlorobenzotriazole, 2-(3,5-di-tert-amyl-2-hydroxyphenyl)-5-chlorobenzotriazole and 2-(2'-hydroxy-5'-tert-octylphenyl)benzotriazole; and acrylonitrile type ones such as ethyl-2-cyano-3,3-diphenylacrylate and methyl-2-carbomethoxy-3-(p-methoxyphenyl)acrylate, among others. Among these, benzotriazole type ones are preferred. These ultraviolet absorbers may be used singly or two or more of them may be used in combination.

As the light stabilizers, there may be mentioned those light stabilizers which are in general use, for example bis(2,2,6,6-tetramethyl-4-piperidyl)sebacate, bis(1,2,2,6,6-pentamethyl-4-piperidyl)sebacate, 1,2,3,4-tetrakis(2,2,6,6-tetramethyl-4-piperidyloxycarbonyl)butane, 1,2,3,4-tetrakis(1,2,2,6,6-pentamethyl-4-piperidyloxycarbonyl)butane, dimethyl succinate-1-(2-hydroxyethyl)-4-hydroxy-2,2,6,6-tetramethylpiperidine polycondensates, bis(1,2,2,6,6-pentamethyl-4-piperidyl) 2-(3,5-di-tert-butyl-4-hydroxybenzyl)-2-n-butylmalonate, 1,2,3,4-butanetetracarboxylic acid-1,2,2,6,6-pentamethyl-4-piperidinol-3,9-bis(2-hydroxy-1,1-dimethylethyl)-2,4,8,10-tetraoxaspiro[5.5]undecane polycondensates, 1-(3,5-di-tert-butyl-4-hydroxyphenyl)-1,1-bis(2,2,6,6-tetramethyl-4-piperidyloxycarbonyl)pentane, 1-[2-[3-(3,5-di-tert-butyl-4-hydroxyphenyl)propionyloxy] ethyl]-4-[3-(3,5-di-tert-butyl-4-hydroxyphenyl) propionyloxy]-2,2,6,6-tetramethylpiperidine, N,N'-bis(3-aminopropyl)ethylenediamine-2,4-bis[N-butyl-N-(1,2,2,6,6-pentamethyl-4-piperidyl)amino]-6-chloro-1,3,5-triazine condensates, 4-benzoyloxy-2,2,6,6-tetramethylpiperidine, poly[{6-(1,1,3,3-tetramethylbutyl)amino-1,3,5-triazine-2,4-diyl}{(2,2,6,6-tetramethyl-4-piperidyl)imino}hexamethylene {(2,2,6,6-tetramethyl-4-piperidyl)imino}] and bis(1-octyloxy-2,2,6,6-tetramethyl-4-piperidyl)sebacate, among others. These may be used singly or two or more of them may be used in combination.

The method of producing the sealing material composition of the invention is not particularly restricted but the methods comprising mechanical mixing using a roll, Banbury mixer or kneader, a melting vessel equipped with a stirrer, or a single-screw or twin-screw extruder can be employed. On that occasion, heating is also possible according to need. The method comprising adding an appropriate solvent to the components/ingredients, stirring the mixture to give a uniform solution of the composition and then distilling off the solvent can also be employed.

In the case of producing the sealing material composition of the invention by effecting dynamic crosslinking of the isobutylene-based polymer (A) with the compound (C) on the occasion of melt mixing of the isobutylene-based polymer (A) with the thermoplastic resin (B), the production can be carried out preferably by the methods given below by way of example.

Employable in the case of production using a closed type or batch type kneader such as a Labo Plastomill, Brabender, Banbury mixer, kneader or roll are, for example, 1) the method comprising melt kneading all the components/ingredients except the compounds (C) and (E) until uniformity, adding the compound (C) and, after sufficient progress of the crosslinking reaction, adding the compound (E), followed by further kneading, 2) the method comprising melt mixing the isobutylene-based polymer (A), thermoplastic resin (B) and compound (C) together sufficiently, adding the catalyst while further kneading, to obtain a composition containing (A) dynamically crosslinked, and then adding the components/ingredients other than (A), (B), (C) and the catalyst, followed by further kneading, and 3) the method comprising melt mixing the isobutylene-based polymer (A), thermoplastic resin (B), compound (C) and other components except the compound (E) and catalyst together sufficiently, then adding the catalyst while further kneading, to obtain a composition containing (A) dynamically crosslinked, and, thereafter, adding the compound (E), followed by further kneading.

Employable in the case of production using a continuous melt kneader such as a single-screw extruder or twin-screw extruder are, for example, 1) the method comprising melt kneading in advance all the components/ingredients except the compounds (C) and (E) until uniformity using a melt kneader such as an extruder, pelletizing the mixture, dry blending the pellets with the compound (C), further melt kneading the resulting mixture using a melt kneader such as an extruder for dynamic crosslinking of the isobutylene-based polymer (A) while adding the compound (E) into the cylinder of the extruder in the middle thereof for further kneading, 2) the method comprising melt kneading all the components/ingredients except the compounds (C) and (E) together using a melt kneader such as an extruder while adding the compound (C) into the cylinder of the extruder in the middle thereof for further melt kneading for dynamic crosslinking of (A), and further adding the compound (E) into the cylinder of the extruder in the middle thereof for further melt kneading, and 3) the method comprising melt kneading the isobutylene-based polymer (A), thermoplastic resin (B) and compound (C) together using a melt kneader such as an extruder, adding the catalyst thereto in the middle of the extruder cylinder for further kneading for dynamic crosslinking of (A), and further adding the remaining components/ingredients thereto in the middle of the extruder cylinder, followed by further kneading.

As for the kneading conditions in carrying out the melt kneading and dynamic crosslinking simultaneously, the temperature to be employed is only required to be not lower than the temperature at which the thermoplastic resin (B) melts; it is preferably not higher than 260°C, however.

If necessary, the sealing material composition of the invention can further be molded using the methods and apparatus which are generally employed for thermoplastic resin compositions in general, for example by extrusion molding, injection molding, press molding or blow molding, for instance.

The method of applying the sealing material composition of the invention as a sealing material for double glazing and as spacers for double glazing is not particularly restricted but, for example, the sealing material composition is molded to give a predetermined shape and form and, immediately following the molding procedure, the moldings are disposed at the edge portions of opposingly disposed at least two panes of glass for double glazing. On that occasion, the use of the high-temperature composition that has come out of the molding machine makes it possible to attain a high level of adhesion (hot melt adhesion) to panes of glass. The composition may be applied to the panes of glass for double glazing using an applicator or a like apparatus while suppressing the fall of the temperature of the composition. Preferred as such apparatus is one capable of being heated.

The panes of glass to be used for manufacturing double glazing using the resin composition of the invention as a sealing material are not particularly restricted but include those panes of glass generally used in windows and doors, among others, which are widely used in building materials, vehicles, cars and so forth, including panes of sheet glass, reinforced glass, laminated glass, meshed glass, heat absorbing glass and, further sheet glass thinly coated with a metal or an inorganic substance on the inside, for example heat-reflecting glass and low reflecting glass, as well as sheets of an acrylic resin or polycarbonate resin, which is called organic glass. The double glazing may be constituted of two panes of glass or three of more panes of glass.

The molding may also be realized by applying an adhesive or primer dissolved in a solvent to the glass surface portions to come into contact with the composition of the invention and, after air drying, disposing the sealing material composition melted at a temperature of 80 to 200°C, for instance, between the two panes of glass while extruding through a die having an appropriate tip shape using a general-purpose extruder having a cylinder with an appropriate diameter, followed by cooling.

The above-mentioned methods of double glazing preparation serve only as typical example. Accordingly, the method of double glazing manufacture using the sealing material for double glazing of the invention is itself not limited to the methods mentioned above. Thus, for example, it is also possible to mold, in advance, sealing material spacers (sealing materials simultaneously serving as spacers) with a desired shape and form from the above sealing material composition and subject these to thermocompression bonding to the two panes of glass, for instance.

### BEST MODE FOR CARRYING OUT THE INVENTION

The following examples illustrate the present invention in further detail. These examples are, however, by no means limitative of the scope of the present invention.

### (Production Example 1)

### [Production of alkenyl group-terminated isobutylene-based copolymer (APIB)]

2-L separable flask equipped with a 3-way cock, a thermocouple and a seal for stirring was subjected to nitrogen purging. After nitrogen purging, nitrogen was flowed through 3-way cock. Then, 785 ml of toluene and 265 ml of ethylcyclohexane were added into flask with syringe. After addition of solvent, moisture content was measured by using Karl Fischer's moisture titrator. After the measurement, the flask was cooled to about -70°C. Then, 277 ml (2,933 mmol) of isobutylene monomer was added into the flask. After re-cooling of the flask to about -70°C, 0.85 g (3.7 mmol) of p-dicumyl chloride and 0.68 g (7.4 mmol) of picoline dissolved in 10 ml of toluene were added. At the time when the inner temperature of the reaction system was stabilized to -74°C, polymerization was initiated by adding 19.3 ml (175.6 mmol) of titanium tetrachloride. At the time when polymerization reaction was completed (90 minutes after the initiation of the polymerization), 1.68 g (11.0 mmol) of 75% allyltrimethylsilane/toluene solution was added, and then the mixture was subjected to reaction for further two hours. Subsequently, a catalyst was deactivated by adding pure water heated to about 50°C, organic layer was washed with three portions of pure water (70°C to 80°C), and then organic solvent was distilled off at 80°C under reduced pressure. As a result, an isobutylene-based copolymer having a number average molecular weight of 45,500 and 2.0 terminal allyl groups per molecule was obtained.

The number average molecular weight values herein were measured by using a Waters Corporation's 510 type GPC system (solvent = chloroform, flow rate = 1 ml/minute), and were determined in terms of polystyrene equivalent.

### (Production Example 2)

### [Production of a styrene-isobutylene-styrene triblock copolymer (SIBS)]

The polymerization vessel in a 2-L separable flask was subjected to nitrogen purging, and using an injection syringe, 456.1 mL of n-hexane (dried with molecular sieves) and 656.5 mL of butyl chloride (dried with molecular sieves) were added. The polymerization vessel was cooled by immersion in a dry ice/methanol bath at -70°C. Then, a Teflon (registered trade mark) liquid delivery tube was connected to a pressure-resistant glass liquefaction sampling tube equipped with a 3-way cock and containing 232 mL (2,871 mmol) of isobutylene monomer and the isobutylene monomer was delivered under nitrogen pressure to the polymerization vessel. Then, 0.647 g (2.8 mmol) of p-dicumyl chloride and 1.22 g (14 mmol) of N,N-dimethylacetamide were added, further followed by addition of 8.67 mL (79.1 mmol) of titanium tetrachloride, and the polymerization was started. The reaction mixture was stirred at the same temperature for 1.5 hours after the start of polymerization and about 1 mL of the polymer slurry was withdrawn as a sample. Then, the mixed solution of 77.9 g (748 mmol) of styrene monomer, 23.9 ml of n-hexane and 34.3 ml of butyl chloride, cooled to -70°C in advance, was added to the polymerization vessel. Forty-five minutes following addition of the mixed solution, about 40 ml of ethanol was added to terminate the reaction.

After the solvent and the like were distilled off from the reaction mixture, the residue was dissolved in toluene and washed with two portions of water. This toluene solution was poured into a large quantity of methanol to precipitate the polymer and the polymer thus obtained was dried in vacuo at 60°C for 24 hours to recover the objective isobutylene-based triblock copolymer. The number average molecular weight of the isobutylene-based polymer before the addition of styrene was 50,000, and the number average molecular weight of the block copolymer after the polymerization of styrene was 67,000.

### (Production Example 3)

### [Production of a styrene-isobutylene diblock copolymer (SIB)]

The polymerization vessel in a 500-ml separable flask, after nitrogen purging, was charged with 84.9 mL of n-hexane (dried with molecular sieves) and 122.2 mL of butyl chloride (dried with molecular sieves) using an injection syringe and the polymerization vessel was cooled by immersion in a dry ice/methanol bath at -70°C. Then, a Teflon (registered trade mark) liquid delivery tube was connected to a pressure-resistant glass liquefaction sampling tube equipped with a 3-way cock and containing 78.3 mL (828.8 mmol) of isobutylene monomer and the isobutylene monomer was delivered under nitrogen pressure to the polymerization vessel. Then, 0.217 g (1.4 mmol) of cumyl chloride and 0.12 g (1.4 mmol) of N, N-dimethylacetamide were added, followed by addition of 1.54 mL (14.0 mmol) of titanium tetrachloride, and the polymerization was started. The reaction mixture was stirred for 120 minutes after the start of polymerization and about 1 mL of the polymer slurry was withdrawn as a sample. Then, 9.48 g (91.0 mmol) of styrene monomer was fed to the polymerization vessel. Forty-five minutes following addition of the above mixed solution, the reaction mixture was poured into a large amount of water to terminate the reaction.

The reaction mixture was washed with two portions of water, the solvent was distilled off from the reaction mixture, and the polymer thus obtained was dried in vacuo at 60°C for 24 hours to recover the objective isobutylene-based diblock copolymer. The number average molecular weight thereof was 48,000.

The abbreviations for the materials used in Examples 1 to 35 and Comparative Examples 1 to 8 and the particulars thereof are given below.

### [Particulars of the components/ingredients described in the examples etc.]

### Component A

APIB: Alkenyl group-terminated isobutylene-based copolymer (Production Example 1)

IIR: Butyl rubber (Butyl 065, product of JSR Corporation)

### Component B

SIBS: Styrene-isobutylene-styrene triblock copolymer

### (Production Example 2)

SIB: Styrene-isobutylene diblock copolymer (Production Example 3)

TPU: Thermoplastic polyurethane elastomer (PANDEX (registered trademark) T-1375, product of DIC Bayer Polymer Ltd.)

PP: Polypropylene (Grand Polypro (registered trademark) J215W, product of Grand Polymer Co., Ltd.)

PE: Polyethylene (Hizex (registered trademark) 2200J, product of Mitsui Chemicals, Inc.)

EOC: Ethylene-octene copolymer (ENGAGE 8150, product of Dow Chemical Company)

IIR: Butyl rubber (Butyl 065, product of JSR)

### Component C

Hydrosilyl group-containing compound: Polysiloxane represented by the following chemical formula:

(CH₃)₃SiO-[Si(H)(CH₃)O]₄₀-Si(CH₃)₃

IIR crosslinking agent: Mixture of 4 parts of zinc oxide, 1 part of stearic acid, 2 parts of sulfur, 1 part of tetramethylthiuram disulfide and 0.5 part of dibenzothiazyl disulfide

### Component E

ADH: Adipic acid hydrazide (product of Japan Hydrazine Company, Inc.)

IDH: Isophthalic acid dihydrazide (product of Japan Hydrazine Company, Inc.)

DCDA: Dicyandiamide (product of Tokyo Chemical Industry Co., Ltd.)

### Component F

Petroleum resin: (ARKON (registered trademark) P-100, product of Arakawa Chemical Industries, Ltd.)

### Component G

CB: Carbon black (F200, product of Asahi Carbon Co., Ltd.)

### Component H

Paraffin-based: Process oil (PW-380, product of Idemitsu Kosan Co., Ltd.)

Polyisobutylene-based: (Idemitsu Polybutene 300H, product of Idemitsu Kosan)

### Component I

Vinyl type: Vinyltrimethoxysilane

Methacrylic: 3-Methacryloxypropyltrimethoxysilane

Amino type: 3-Aminopropyltrimethoxysilane

### Catalyst

Pt: Zero-valent

### platinum-1,1,3,3-tetramethyl-1,3-dialkenyldisiloxane complex, 3% (by weight) solution in xylene

### (Examples 1 to 9 and Comparative Examples 1 and 2)

First, the isobutylene-based polymer (A) and the vinyl type alkoxysilane compound, namely component (I), were melt blended beforehand in each mixing ratio given in Table 1 under the conditions not exceeding 120°C. Using a Labo Plastomill kneader (product of Toyo Seiki Seisaku-sho, Ltd.), this mixture and the thermoplastic resin (B), tackifier resin (F), inorganic filler (G), plasticizer (H) and crosslinking catalyst component were melt kneaded together to a sufficient extent in the mixing ratio given in Table 1 under the conditions of 100 to 180°C and, then, the hydrosilyl group-containing compound (C) was added with kneading for dynamic crosslinking. Thereafter, the remaining component (I) (other than the vinyl type) was added, followed by melt kneading. A sealing material composition was thus produced.

### [Moisture permeability test piece production]

A sheet, 1 mm in thickness, was produced by subjecting the resin composition obtained to heat pressing under the conditions of 100 to 200°C.

### [Glass adhesion and shape retention test specimen production]

The resin composition obtained was molded into test pieces, 10 mm wide x 50 mm long x 12 mm thick, by subjecting to heat pressing under the conditions of 100 to 200°C. Each test piece was sandwiched between two glass plates, 50 mm wide x 50 long x 5 mm thick, and the whole was cured in an oven maintained at 100 to 170°C for 30 minutes to give a test specimen.

### [Evaluation methods]

### (Moisture permeability)

Moisture permeability measurements were carried out at 40°C and 90% RH according to JIS Z 0208.

### (Shape retention test)

One pane of glass was fixed, and a load of 3 Kg was applied to the other pane of glass for 15 minutes. Under the temperature condition of 25°C, the distance of downward movement of the loaded side glass pane was measured; a movement of 0.5 mm or less was evaluated as Excellent, and a movement of 0.5 mm or more as Poor. The results are shown in Table 1.

### (Glass adhesion test)

The two panes of glass were maintained, in a condition such that the space therebetween was enlarged by 10% by elongation deformation as compared with the initial state (after production), under the temperature condition of 25°C for 1 week, and the degree of adhesion at the interface between each pane of glass and the material was observed; when no adhesion area change was observed as compared with the area before testing (initial), the behavior was evaluated as Excellent, and when peeling was observed, the behavior was evaluated as Poor. The results are shown in Table 1.

The abbreviations for the materials used in Examples 1 to 9 and Comparative Examples 1 and 2 and the particulars thereof are as given hereinabove.

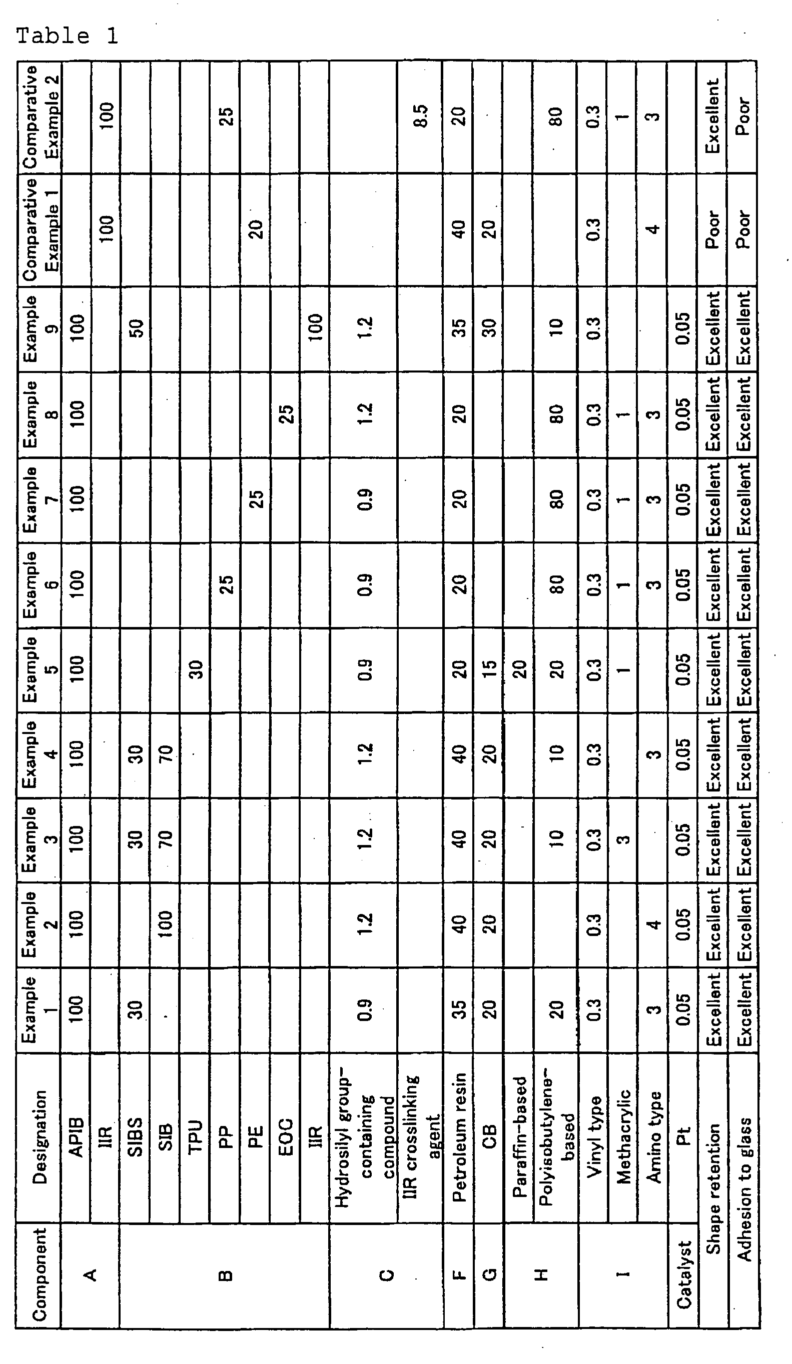

In all of Examples 1 to 9 and Comparative Examples 1 and 2, the moisture permeability showed a good value, namely not higher than 5 g/m²·24h.

The compositions of Examples 1 to 9, namely the compositions of the invention containing the alkenyl-terminated isobutylene-based polymer (A), the thermoplastic resin (B) and the hydrosilyl group-containing compound (C), were excellent in glass adhesion and shape retention, whereas the composition of Comparative Example 1 whose main component was an isobutylene-based butyl rubber showed high cold flow characteristics and was readily deformed, with the result that the role as a spacer could not be played to a satisfactory extent. The composition of Comparative Example 2 as prepared by dynamic crosslinking with sulfur under melt kneading of the butyl rubber with a thermoplastic resin (PP) showed good shape retention but was insufficient in adhesion to glass, resulting in easy peeling. This is considered to indicate that the siloxane sites introduced by the hydrosilylation reaction and/or the Si-OH group formation by partial hydrolysis of Si-H had effectively influenced the adhesion to glass.

### (Examples 10 to 21 and Comparative Examples 3 to 5)

The isobutylene-based polymer (A), thermoplastic resin (B), hydrosilylation catalyst and compound (D) were melt blended beforehand in each mixing ratio given in Table 2 or 3 under the conditions not exceeding 120°C. The compound (C) was added to this mixture in the mixing ratio given in Table 2, and the whole mixture was sufficiently melt kneaded together using a Labo Plastomill kneader (product of Toyo Seiki Seisaku-sho, Ltd.). Thereafter, the tackifier resin (F), inorganic filler (G) and plasticizer (H) added thereto in the mixing ratio given in Table 2 or 3 and the resulting mixture was further melt kneaded under the conditions of 100 to 180°C. Each sealing material composition was thus produced.

### [Moisture permeability test piece production]

A sheet, 0.9 mm in thickness, was produced by subjecting the resin composition obtained to heat pressing under the conditions of 100 to 200°C. Sheets could be molded with ease from the compositions of Examples 10 to 21.

### [Hardness test piece production]

A sheet, 12 mm in thickness, was produced by subjecting the resin composition obtained to heat pressing under the conditions of 100 to 200°C.

### [Glass adhesion test specimen production]

The resin composition obtained was molded into test pieces, 30 mm wide x 50 mm long x 0.3 mm thick, by subjecting to heat pressing under the conditions of 100 to 200°C. Each test piece was placed on glass plate, 50 mm wide x 50 long x 5 mm thick, and the whole was cured in an oven maintained at, 100 to 180°C under a load of 2 Kg for 30 minutes to give a test specimen.

### [Evaluation methods]

### (Moisture permeability)

For the compositions of Examples 10 and 17, moisture permeability measurements were carried out at 40°C and 90% RH according to JIS Z 0208.

Upon moisture permeability measurements of the samples of Examples 1 and 8, the moisture permeability of the sample of Example 10 was 0.6 g/m²·24h and the moisture permeability of the sample of Example 17 was 0.4 g/m²·24h.

### (Hardness)

The procedure described in JIS K 6252 was followed. The test specimens used were 12.0-mm-thick pressed sheets.

The samples of Examples 10, 11 and 19 were subjected to hardness testing; the hardness of the sample of Example 10 was 40, the hardness of the sample of Example 11 was 33 and the hardness of the sample of Example 19 was 45.

### (Glass adhesion test)

Each test piece was cured at room temperature for 1 day. According to the cross cut test method prescribed in JIS K 5400, the composition sheet was given cuts with a cutter knife, a pressure-sensitive adhesive tape prescribed in JIS Z 1522 was applied to the composition sheet surface, and the tape was peeled off; when the composition sheet remained on the glass surface, the adhesion was evaluated as Excellent and, when peeling was observed, the adhesion was evaluated as Poor. The results thus obtained are shown in Tables 2 and 3 under the heading "initial adhesion".

Separately, the test piece after 1 day of curing at room temperature was further immersed in warm water at 80°C for 14 days, then taken out and, after the subsequent 2 hours of curing at room temperature, subjected to the same testing as described above. The results thus obtained are shown in Tables 2 and 3 under the heading "warm water-resistant adhesion".

**Table 2**

| Component | Designation | Example 10 | Example 11 | Example 12 | Example 13 | Example 14 | Example 15 | Example 16 |
|---|---|---|---|---|---|---|---|---|
| A | APIB | 100 | 100 | 100 | 100 | 100 | 100 | 100 |
| | IIR | | | | | | | |
| B | SIBS | 100 | | | | | | |
| | SIB | | 100 | 100 | 100 | 100 | 100 | 150 |
| | TPU | | | | | | | |
| | PE | | | | | | | |
| | IIR | | | | | | | |
| C | Hydrosilyl group-containing compound | 6 | 6 | 5 | 6 | 6 | 6 | 6 |
| | IIR crosslinking agent | | | | | | | |
| D | Allyl glycidyl ether | 9 | 9 | | | | | 9 |
| | Maleic anhydride | | | 8 | | | | |
| | α-Methylstyrene | | | | | | | |
| | Monoallyl diglycidyl isocyanurate | | | | 10 | | | |
| | Triallyl isocyanurate | | | | | 10 | | |
| | Allyloxyethyl methacrylate | | | | | | 10 | |
| F | Petroleum resin | | | | | | | |
| G | CB | | | | | | | |
| H | Polyisobutylene-based | | | | | | | |
| Catalyst | Pt | 0.05 | 0.05 | 0.05 | 0.05 | 0.05 | 0.05 | 0.05 |
| Initial adhesion | | Excellent | Excellent | Excellent | Excellent | Excellent | Excellent | Excellent |
| Warm water-resistant adhesion | | Excellent | Excellent | Excellent | Excellent | Excellent | Excellent | Excellent |

**Table 3**

| Component | Designation | Example 17 | Example 18 | Example 19 | Example 20 | Example 21 | Comparative Example 3 | Comparative Example 4 | Comparative Example 5 |
|---|---|---|---|---|---|---|---|---|---|
| A | APIB | 100 | 100 | 100 | 100 | 100 | | | |
| | IIR | | | | | | 100 | 100 | 100 |
| B | SIBS | 30 | 70 | | | | | | |
| | SIB | 70 | 30 | | | | | | |
| | TPU | | | 30 | | | | | |
| | PE | | | | 25 | | 25 | 25 | 25 |
| | IIR | | | | | 50 | | | |
| C | Hydrosilyl group-containing compound | 9 | 9 | 6 | 6 | 6 | 6 | 6 | |
| | IIR crosslinking agent | | | | | | | | 8.5 |
| D | Allyl glycidyl ether | 9 | 8 | 7 | | 9 | 9 | 9 | 4 |
| | Maleic anhydride | | 2 | | | | | | |
| | α-Methylstyrene | 2 | | | 4 | | | | |
| | Monoallyl diglycidyl isocyanurate | | | 2 | 4 | | | | 1 |
| | Triallyl isocyanurate | | | | | | | | |
| | Allyloxyethyl methacrylate | | | | | | | | |
| F | Petroleum resin | 40 | 40 | 40 | 40 | 40 | | 40 | 20 |
| G | CB | 20 | 20 | 10 | 20 | 30 | | 20 | 40 |
| H | Polyisobutylene-based | 20 | 40 | 30 | 40 | 10 | | 20 | 40 |
| Catalyst | Pt | 0.05 | 0.05 | 0.05 | 0.05 | 0.05 | 0.05 | 0.05 | |
| Initial adhesion | | Excellent | Excellent | Excellent | Excellent | Excellent | Excellent | Excellent | Poor |
| Warm water-resistant adhesion | | Excellent | Excellent | Excellent | Excellent | Excellent | Poor | Poor | - |

As for the moisture permeability, the samples of Examples 10 and 17 gave values not higher than 1 g/m2.24h, indicating that the sealing material compositions of the invention have high level gas barrier properties.

The samples of Examples 10 to 21 were excellent in adhesion to glass and in durability (in warm water), whereas the samples of Comparative Examples 3 and 4 whose main component were an isobutylene-based butyl rubber was inferior in durability although they showed good initial adhesion to glass. In Comparative Example 5 in which the butyl rubber was dynamically crosslinked with sulfur, the results were inferior in initial adhesion.

This is presumably due to the contribution of the siloxane sites introduced by the hydrosilylation reaction and/or the Si-OH group formation by partial hydrolysis of Si-H to the initial adhesion to glass and, further, due to the contribution of the functional groups contained in the component (D) toward the effective improvement in adhesion durability.

Further, the samples of Examples 10, 11 and 19 showed hardness values not lower than 30 and these results indicate that the compositions of the invention can be used as spacers for double glazing.

### (Examples 22 to 35 and Comparative Examples 6 to 8)

The isobutylene-based polymer (A), thermoplastic resin (B), hydrosilylation catalyst and compound (D) were melt blended beforehand in each mixing ratio given in Table 4 or 5 under the conditions not exceeding 120°C. The compound (C) was added to this mixture in the mixing ratio given in Table 4 or 5, and the whole mixture was sufficiently melt kneaded together using a Labo Plastomill kneader (product of Toyo Seiki Seisaku-sho, Ltd.). Thereafter, the nitrogen atom-containing compound (E), tackifier resin (F), inorganic filler (G) and plasticizer (H) were added thereto in the mixing ratio given in Table 4 or 5, and the resulting mixture was further melt kneaded under the conditions of 100 to 180°C. Each sealing material composition was thus produced.

### [Moisture permeability test piece production]

A sheet, 0.9 mm in thickness, was produced by subjecting the sealing material composition obtained to heat pressing under the conditions of 100 to 200°C. This was used as the test piece for moisture permeability measurement.

### [Hardness test piece production]

A sheet, 12 mm in thickness, was produced by subjecting the sealing material composition obtained to heat pressing under the conditions of 100 to 200°C, and this was used as the test piece for hardness measurement.

### [Glass adhesion test specimen production]

The sealing material composition obtained was molded into test pieces, 30 mm wide x 50 mm long x 0.3 mm thick, by subjecting to heat pressing under the conditions of 100 to 200°C. Sheets could readily be molded from the compositions of Examples 22 to 35 and Comparative Examples 6 and 7. Each test piece was placed on glass plate, 50 mm wide x 50 long x 5 mm thick, and the whole was cured in an oven maintained at 150 to 180°C under a load of 2 Kg for 30 minutes to give a test specimen.

### [Evaluation methods]

### (Moisture permeability)

For the compositions of Examples 23 and 32, moisture permeability measurements were carried out at 40°C and 90% RH according to JIS Z 0208.

Upon moisture permeability measurements of the samples of Examples 23 and 32, the moisture permeability of the sample of Example 23 was 0.5 g/m²·24h and the moisture permeability of the sample of Example 32 was 0.4 g/m²·24h.

### (Hardness)

The procedure described in JIS K 6252 was followed. The test specimens used were 12.0-mm-thick pressed sheets.

The samples of Examples 22, 23 and 32 were subjected to hardness testing; the hardness of the sample of Example 22 was 40, the hardness of the sample of Example 23 was 33 and the hardness of the sample of Example 32 was 35.

### (Glass adhesion test)

Each test piece was cured at room temperature for 1 day. According to the cross cut test method prescribed in JIS K 5400, the composition sheet was given cuts with a knife, a pressure-sensitive adhesive tape prescribed in JIS Z 1522 was applied to the composition sheet surface, and the tape was peeled off; when the composition sheet remained on the glass surface, the adhesion was evaluated as Excellent and, when peeling was observed, the adhesion was evaluated as Poor. The results thus obtained are shown in Tables 4 and 5 under the heading "initial adhesion".

Separately, the test piece after 1 day of curing at room temperature was further immersed in warm water at 80°C for 30 days, then taken out and, after the subsequent 2 hours of curing at room temperature, subjected to the same testing as described above. The results thus obtained are shown in Tables 4 and 5 under the heading "warm water-resistant adhesion".

**Table 4**

| Component | Designation | Example 22 | Example 23 | Example 24 | Example 25 | Example 26 | Example 27 | Example 28 | Example 29 |
|---|---|---|---|---|---|---|---|---|---|
| A | APIB | 100 | 100 | 100 | 100 | 100 | 100 | 100 | 100 |
| | IIR | | | | | | | | |
| B | SIBS | 100 | | | | | 30 | | |
| | SIB | | 100 | 100 | 100 | 150 | 70 | 100 | 100 |
| | TPU | | | | | | | | |
| | PE | | | | | | | | |
| | IIR | | | | | | | | |
| C | Hydrosilyl group-containing compound | 6 | 6 | 6 | 6 | 6 | 6 | 6 | 6 |
| | IIR crosslinking agent | | | | | | | | |
| D | Allyl glycidyl ether | 9 | 9 | 9 | 9 | 9 | 9 | | |
| | Monoallyl diglycidyl isocyanurate | | | | | | | 10 | |
| | Triallyl isocyanurate. | | | | | | | | 10 |
| E | ADH | 5 | 5 | | | 5 | 5 | 5 | 5 |
| | IDH | | | 6 | | | | | |
| | DCDA | | | | 4 | | | | |
| F | Petroleum resin | | | | | | | | |
| G | CB | | | | | | | | |
| H | Polyisobutylene-based | | | | | | | | |
| Catalyst | Pt | 0.05 | 0.05 | 0.05 | 0.05 | 0.05 | 0.05 | 0.05 | 0.05 |
| Initial adhesion | | Excellent | Excellent | Excellent | Excellent | Excellent | Excellent | Excellent | Excellent |
| Warm water-resistant adhesion | | Excellent | Excellent | Excellent | Excellent | Excellent | Excellent | Excellent | Excellent |

**Table 5**

| Component | Designation | Example 30 | Example 31 | Example 32 | Example 33 | Example 34 | Example 35 | Compartive Example 6 | Compartive Example 7 | Compartive Example 8 |
|---|---|---|---|---|---|---|---|---|---|---|
| A | APIB | 100 | 100 | 100 | 100 | 100 | 100 | | | |
| | UR | | | | | | | 100 | 100 | 100 |
| B | SIBS | | | 30 | | 30 | | | | |
| | SIB | 70 | 70 | | 150 | 70 | 100 | | | |
| | TPU | 30 | | | | | | | | |
| | PE | | 20 | | | | | 20 | 20 | 20 |
| | IIR | | | 50 | | | | | | |
| C | Hydrosilyl group-containing compound | 6 | 6 | 6 | 9 | 6 | 6 | 6 | 6 | |
| | IIR crosslinking agent | | | | | | | | | 8.5 |
| D | Allyl glycidyl ether | 9 | 9 | 9 | 8 | 9 | 9 | 9 | 9 | 4 |
| | Monoallyl diglycidyl isocyanurate | | | | | | | | | 1 |
| | Triallyl isocyanurate | | | | | | | | | |
| E | ADH | 5 | 5 | 5 | 5 | 5 | 8 | 8 | 8 | 7 |
| | IDH | | | | | | | | | |
| | DCDA | | | | | | | | | |
| F | Petroleum resin | | | | 5 | 10 | | | 20 | 20 |
| G | CB | | | | 40 | 20 | 40 | | 40 | 40 |
| H | Polyisobutylene-based | | | | 20 | | 10 | | | 40 |
| Catalyst | Pt | 0.05 | 0.05 | 0.05 | 0.05 | 0.05 | 0.05 | 0.05 | 0.05 | |
| Initial adhesion | | Excellent | Excellent | Excellent | Excellent | Excellent | Excellent | Excellent | Excellent | Poor |
| Warm water-resistant adhesion | | Excellent | Excellent | Excellent | Excellent | Excellent | Excellent | Poor | Poor | - |

As for the moisture permeability, the samples of Examples 23 and 32 gave values not higher than 0.5 g/m²·24h, indicating that the sealing material compositions of the invention have high level gas barrier properties.

The samples of Examples 23 to 35 were excellent in adhesion to glass and in durability (in warm water), whereas the samples of Comparative Examples 6 and 7 whose main component was an isobutylene-based butyl rubber were inferior in durability although they showed good initial adhesion to glass. In Comparative Example 8 in which the isobutylene-based butyl rubber was dynamically crosslinked with sulfur, the results were inferior in initial adhesion.

This is presumably due to the contribution of the siloxane sites introduced by the hydrosilylation reaction and/or the Si-OH group formation by partial hydrolysis of Si-H to the initial adhesion to glass and, further, due to the contribution of the functional groups contained in the component (D) and component (E) toward the effective improvement in adhesion durability.

Further, the samples of Examples 22, 23 and 32 showed hardness values not lower than 30 and these results indicate that the compositions of the invention can be suitably used as spacers for double glazing.

### INDUSTRIAL APPLICABILITY

The sealing material composition of the invention is excellent in gas barrier properties and has hot melt tackiness or adhesiveness and long-term bond durability, so that it can be suitably used as or in a glass sealing material, gaskets, caps and seals for medical use, food package sealing, interior and exterior decoration of cars, civil engineering and waterproof sheets, pressure sensitive adhesive tapes, and other various sealing materials or sealants. It can be properly used as a sealing material for double glazing, among others. The composition of the invention provides a sufficiently high level of hardness, so that it can also be used in the form of spacers for double glazing. Here, the spacers made of the composition of the invention have a sealing material function as well, so that no other sealing material is required.

## Claims

1. A sealing material composition
which comprises an alkenyl group-terminated isobutylene-based polymer (A), a thermoplastic resin (B) and a compound (C) containing at least two hydrosilyl groups within the molecule thereof.

2. The sealing material composition according to Claim 1
which further comprises a carbon-carbon unsaturated bond-containing functional group-containing compound (D), which is different from the component (A).

3. The sealing material composition according to Claim 1 or 2
which further comprises at least one nitrogen atom-containing compound (E) which is at least one species selected from the group consisting of amines, amides and carboxylic acid hydrazides.

4. The sealing material composition according to any one of Claims 1 to 3
wherein the alkenyl group-terminated isobutylene-based polymer (A) is crosslinked by the compound (C) containing at least two hydrosilyl groups within the molecule thereof.

5. The sealing material composition according to Claim 4
wherein the alkenyl group-terminated isobutylene-based polymer (A) is dynamically crosslinked by the compound (C) containing at least two hydrosilyl groups within the molecule thereof in the step of melt kneading with the thermoplastic resin (B).

6. The sealing material composition according to any one of Claims 1 to 5
which further comprises a tackifier resin (F).

7. The sealing material composition according to any one of Claims 1 to 6
which further comprises an inorganic filler (G).

8. The sealing material composition according to any one of Claims 1 to 7
which further comprises a plasticizer (H).

9. The sealing material composition according to any one of Claims 1 to 8
which further comprises an alkoxysilane compound (I).

10. The sealing material composition according to anyone of Claims 1 to 9
wherein the thermoplastic resin (B) is at least one species selected from the group consisting of thermoplastic elastomers, polyethylene, polypropylene, ethylene-α-olefin copolymers, polyisobutylene, isobutylene-isoprene copolymers (butyl rubbers), chlorinated butyl, brominated butyl, isobutylene-(p-methylstyrene) copolymers, and brominated isobutylene-(p-methylstyrene) copolymers.

11. The sealing material composition according to Claim 10
wherein the thermoplastic elastomer is a styrenic thermoplastic elastomer and/or a thermoplastic polyurethane elastomer.

12. The sealing material composition according to Claim 11
wherein the styrenic thermoplastic elastomer is an isobutylene-based block copolymer (B1) composed of a polymer block (a) derived from an aromatic vinyl compound as the constituent monomer and a polymer block (b) derived from isobutylene as the constituent monomer.

13. The sealing material composition according to Claim 12
wherein the isobutylene-based block copolymer (B1) is a triblock copolymer composed of a polymer block (a) derived from an aromatic vinyl compound as the constituent monomer/a polymer block (b) derived from isobutylene as the constituent monomer/a polymer block (a) derived from an aromatic vinyl compound as the constituent monomer.

14. The sealing material composition according to Claim 12
wherein the isobutylene-based block copolymer (B1) is a diblock copolymer composed of a polymer block (a) derived from an aromatic vinyl compound as the constituent monomer and a polymer block (b) derived from isobutylene as the constituent monomer.

15. The sealing material composition according to any one of Claims 1 to 14
wherein the compound (C) is a polyarganohydrogensiloxane (C1) containing two or more hydrosilyl groups, on average, per molecule of the molecule thereof.

16. The sealing material composition according to Claim 15
wherein the polyorganohydrogensiloxane (C1) is a polyorganohydrogensiloxane comprising 2 to 200 siloxane units.

17. The sealing material composition according to any one of Claims 2 to 16
wherein the carbon-carbon unsaturated bond-containing functional group-containing compound (D) further has at least one functional group selected from the group consisting of an epoxy group, alkoxy groups, radical polymerizable unsaturated groups, a carboxyl group, a carboxylic acid anhydride group, halogen atoms and alkoxysilyl groups.

18. The sealing material composition according to Claim 17
wherein the carbon-carbon unsaturated bond-containing functional group-containing compound (D) is allyl glycidyl ether and/or monoallyl diglycidyl isocyanurate.

19. The sealing material composition according to any one of Claims 3 to 18
wherein the nitrogen atom-containing compound (E) is at least one species selected from among dicarboxylic acid hydrazides.

20. A sealing material
which comprises the sealing material composition according to any one of Claims 1 to 19.

21. A sealing material for double glazing
which comprises the sealing composition according to any one of Claims 1 to 19.

22. A spacer for double glazing
which comprises the sealing material composition according to any one of Claims 1 to 19.
